(19) Europäisches Patentamt
European Patent Office
Office européen des brevets

(11) **EP 1 505 793 B1**

(12) **EUROPEAN PATENT SPECIFICATION**

(45) Date of publication and mention
of the grant of the patent:
**30.05.2007 Bulletin 2007/22**

(51) Int Cl.:
*H04L 29/06* (2006.01)      *H04L 12/18* (2006.01)
*H04L 12/56* (2006.01)      *H04L 12/28* (2006.01)

(21) Application number: **04018841.9**

(22) Date of filing: **09.08.2004**

(54) **Method and apparatus for configuring protocols for a multimedia broadcast/multicast service**

Verfahren und Vorrichtung zur Konfiguration von Protokollen für einen Multimedia Broadcast/Multicast Dienst

Procédé et dispositif pour la configuration de protocoles pour un service Multimedia Broadcast/Multicast

(84) Designated Contracting States:
**DE FR GB**

(30) Priority: **08.08.2003 KR 2003055086**
**18.11.2003 KR 2003081686**
**04.12.2003 KR 2003087768**

(43) Date of publication of application:
**09.02.2005 Bulletin 2005/06**

(60) Divisional application:
**06004502.8 / 1 686 740**

(73) Proprietor: **SAMSUNG ELECTRONICS CO., LTD.**
**Suwon-si,**
**Gyeonggi-do (KR)**

(72) Inventors:
• **Kim, Soeng-Hun**
**Samsung Electronics Co., Ltd.**
**Suwon-si**
**Gyeonggi-do (KR)**
• **Lee, Kook-Heui**
**Samsung Electronics Co., Ltd.**
**Suwon-si**
**Gyeonggi-do (KR)**
• **Choi, Sung-Ho**
**Samsung Electronics Co., Ltd.**
**Suwon-si**
**Gyeonggi-do (KR)**
• **Van Lieshout, Gert Jan**
**Samsung Electronics Co. Ltd**
**Suwon-si**
**Gyeonggi-do (KR)**

(74) Representative: **Grünecker, Kinkeldey,**
**Stockmair & Schwanhäusser**
**Anwaltssozietät**
**Maximilianstrasse 58**
**80538 München (DE)**

(56) References cited:
• **"3RD GENERATION PARTNERSHIP PROJECT; TECHNICAL SPECIFICATION GROUP SERVICES AND SYSTEM ASPECTS; MULTIMEDIA BROADCAST/MULTICAST SERVICE (MBMS); ARCHITECTURE AND FUNCTIONAL DESCRIPTION (RELEASE 6)"** 3GPP TR 23.846 6.1.0, XX, XX, December 2002 (2002-12), page COMPLETE14, XP002302176
• **BORNMANN ET ALL: "Robust Header Compression (ROHC): Framework and four profiles: RTP, UDP, ESP, and uncompressed"** RFC 3095, 1 July 2001 (2001-07-01), XP015008878 IETF
• **ASHOK KUMAR: "UTRAN architecture for Multimedia Broadcast Multicast Service (MBMS)"** INTERNATIONAL CONFERENCE ON COMMUNICATION AND BROADBAND NETWORKING, XX, XX, 5 May 2003 (2003-05-05), pages 1-7, XP002263989

EP 1 505 793 B1

**Description**

The present invention relates generally to an MBMS (Multimedia Broadcast/Multicast Service) in a mobile communication system, and in particular, to a method and apparatus for providing an MBMS service to a plurality of cells utilizing a common protocol entity.

UMTS (Universal Mobile Telecommunication Service), which is one of the 3rd generation mobile communication systems, is based on the GSM (Global System for Mobile communication) and GPRS (General Packet Radio Services) communication standards. Yet, it uses the WCDMA (Wideband Code Division Multiple Access) technology, whereas GSM utilizes TDMA (Time Division Multiple Access). UMTS provides a uniform service that transmits packetized text, digital voice and video, and multimedia data at a 2Mbps or higher rate to mobile subscribers or computer users around the world. With the introduction of the concept of virtual access, UMTS enables access to any end point in a network all the time. The virtual access refers to packet-switched access using a packet protocol like IP (Internet Protocol).

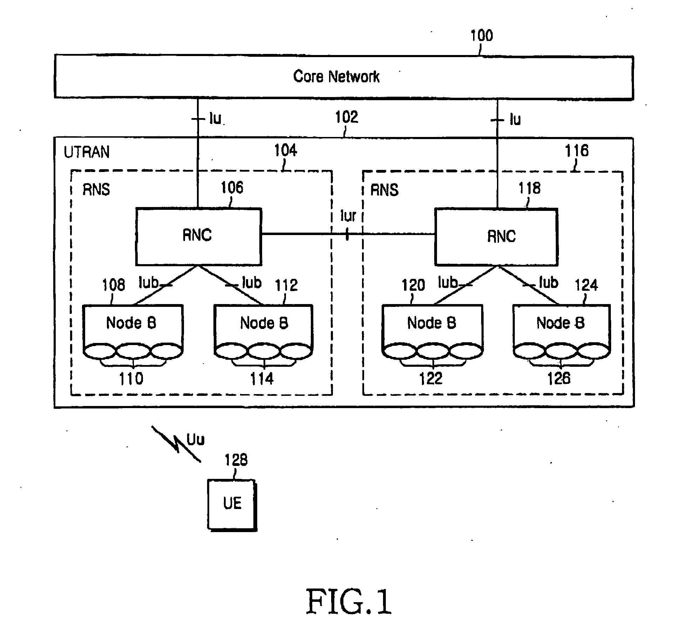

FIG 1 illustrates a conventional UTRAN (UMTS Terrestrial Radio Access Network). Referring to FIG 1, a UTRAN 102 includes a plurality of cells 110, 114, 122, and 126 and Node Bs 108, 112, 120, and 124, and RNCs (Radio Network Controllers) 106 and 118. The UTRAN 102 connects a UE (User Equipment) 128 to a core network (CN) 100. The RNC 106 controls the Node Bs 110 and 114, and the RNC 118 controls the Node Bs 120 and 124. The Node Bs 108, 112, 120, and 124 control their cells 110, 114, 122, and 126, respectively.

An RNC, and Node Bs and cells under the control of the RNC are collectively called an RNS (Radio Network Subsystem). The RNCs 106 and 118 are connected to the Node Bs 108, 112, 120, and 124 via lub interfaces, and the RNC 106 is connected to the RNC 118 via an lur interface.

The RNCs 106 and 118 assign or manage the Node Bs 108, 112, 120, and 124 under their control. The Node Bs 108, 112, 120, and 124 provides actual radio resources. The radio resources are configured for each cell, and the radio resources provided by the Node Bs 108, 112, 120, and 124 are for cells within their coverage areas. The UE 128 establishes a radio channel using radio resources provided by a particular Node B and communicates on the radio channel. Typically, from the UE's perspective, discrimination between a Node B and a cell is meaningless. The UE 128 only recognizes physical channels established on a cell basis. Therefore, the terms Node B and cell are interchangeably used herein.

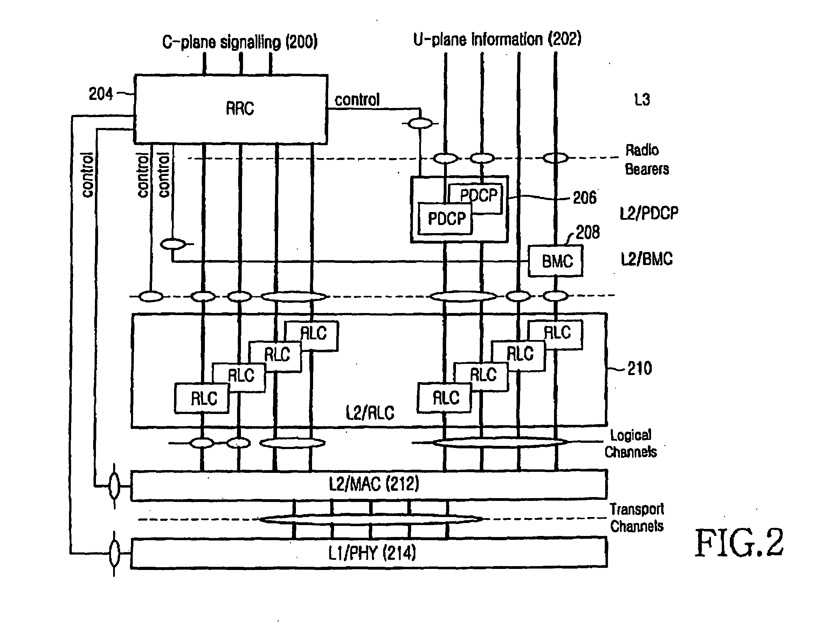

A Uu interface is defined between a UE and an RNC. The hierarchical protocol architecture of the Uu interface is illustrated in detail in FIG 2. Like the lu or lub interface, the Uu interface is considered as a protocol stack configured for communications between nodes. The Uu interface will be described separately into a control plane (C-planc) for exchanging control signals between the UE and the RNC and a user plane (U-planc) for transmitting actual data.

Referring to FIG. 2, C-plane signaling 200 is processed through an RRC (Radio Resource Control) layer 204, an RLC (Radio Link Control) layer 210, a MAC (Medium Access Control) layer 212, and a PHY (PHYsical) layer 214. U-plane information 202 is processed through a PDCP (Packet Data Control Protocol) layer 206, a BMC (Broadcast/Multicast Control) layer 208, the RLC layer 210, the MAC layer 212, and the PHY layer 214. The PHY layer 214 is defined in each cell, and from the MAC layer 212 through the RRC layer 204 is defined in each RNC.

The PHY layer 214 provides an information delivery service by a radio transfer technology, and corresponds to layer 1 (LI) in an OSI (Open Systems Interconnection) model. The PHY layer 214 is connected to the MAC layer 212 via transport channels. The transport channels are defined according to how data is processed in the PHY layer 214. The PHY layer 214 encodes MBMS data with a scrambling code specific to each cell and a channelization code specific to each 5physical channel, for radio transmission.

The MAC layer 212 is connected to the RLC layer 210 via logical channels. The MAC layer 212 delivers data received from the RLC layer 210 to the PHY layer 214 on appropriate transport channels. It also delivers data received from the PHY layer 214 on transport channels to the RLC layer 210 on appropriate logical channels. The MAC layer 212 inserts additional information into data received on logical channels or transport channels or performs an appropriate operation by interpreting inserted additional information, and controls random access.

The RLC layer 210 controls the establishment and release of the logical channels. The RLC layer 210 operates in one of an acknowledged mode (AM), an unacknowledged mode (UM), and a transparent mode (TM). Typically, in the UM, the RLC layer 210 segments an SDU (Service Data Unit) to an appropriate size, concatenates SDUs, and corrects errors by ARQ (Automatic Repeat request). In the TM, the RLC layer 210 just delivers SDUs without any processing.

The PDCP layer 206 is an upper layer than the RLC layer 210 on the U-plane. The PDCP layer 206 is responsible for compression and decompression of the header of data in the form of an IP packet and lossless data delivery when an RNC for providing service to a particular UE is changed due to mobility. While for a general service, the PDCP layer 206 supports lossless SRNS (Serving RNS) relocation and compresses headers, for an MBMS service, it does not need to support the lossless SRNS relocation in view of the nature of broadcasting/multicasting. The SRNS relocation is resetting of an RNC to which a UE moves from an old SRN as a new SRNC. The BMC layer 208 is in an upper layer than the RLC layer 210, and supports a broadcasting service in which the same data is delivered to unspecified multiple UEs.

At a call setup for a particular service, an RNC configures entities for performing protocol operations in the respective PDCP, RLC, MAC, and PHY layers in order to provide the service. A set of the protocol entities are called a radio bearer (RB). Each protocol entity can be configured as a software block. An access point between protocol entities is called an SAP (Service Access Point). For example, an access point between PDCP and RLC entities is an RLC SAP. Through the RLS SAP, the PDCP entity delivers primitives such as RLC-DATA-REQ, which is user data, to the RLC entity.

The RRC layer 204 is responsible for the assignment and release of resources between a UTRAN and a UE. The RRC layer 204 manages resources assigned to UEs in an RRC connected mode, manages their mobility, and delivers CN signals to the UEs.

The above-described protocol configuration between the UE and the RNC in the UMTS communication system is based on point-to-point (PtP) connection. In an MBMS service in which the same multimedia is transmitted to a plurality of receivers over a radio network, the receivers share a single radio channel to save radio transmission resources. For the MBMS service, the PDCP layer 206 controls only functions related to header compression and decompression. Because the MBMS service is provided only on the downlink, the header compression function is performed in the RNC and the header decompression function is performed in the UE.

In the MBMS service, transmission of the same data from one RNC to a plurality of UEs is equivalent to transmission of the same data from the RNC to a plurality of cells where the UEs are positioned. Therefore, a point-to-multiple (PtM) connection is established between the RNC and the UEs. Accordingly, the MBMS service is different from an existing unicast service in which one RNC transmits data to one UE. Therefore, use of one PDCP entity, one RLC entity, one MAC entity, and one PHY entity per RB, as done in existing services, consumes system resources considerably and increases service delay at the same time.

Accordingly, an object of the present invention is to provide a method and apparatus for reducing RNC processing load by configuring an RB for an MBMS service using one PDCP entity and one header compressor in an MBMS mobile communication system.

This object is solved by the present invention and in particular by the subject matter of the independent claims. Preferred embodiments are subject matter of the dependent claims.

Furthermore, an aspect of the present invention is to provide a method for operating one common PDCP entity connected to a plurality of lower-layer protocol entities to provide an MBMS service, and a configuration of the PDCP entity.

A further aspect of the present invention is to provide a method and apparatus for reducing RNC processing load by configuring an RB for an MBMS service in a PtP mode in an MBMS mobile communication system.

Still another aspect of the present invention is to provide a method and apparatus for reducing RNC processing load by forming a common RLC entity in configuring an MBMS RB for processing MBMS data.

The above aspects are achieved by providing a method and apparatus for providing an MBMS service to a plurality of cells in a mobile communication system. In a mobile communication system having an RNC for providing an MBMS service and a plurality of Node Bs connected to the RNC, for providing the MBMS service to UEs within a plurality of cells, the RNC is configured to have a plurality of lower-layer entities corresponding to the cells, and an RLC and PDCP entity common to the cells, for receiving MBMS data from an upper layer and, upon request from one of the lower-layer entities, transmitting the MBMS data to the lower-layer entity.

The above and other objects, features, and advantages of the present invention will become more apparent from the following detailed description when taken in conjunction with the accompanying drawings in which:

FIG 1 illustrates a typical UTRAN to provide an MBMS service;
FIG 2 illustrates a hierarchical protocol architecture of an interface between a UE and an RNC;
FIG 3 illustrates the configuration of an MBMS mobile communication system;
FIG 4 is a diagram illustrating a signal flow for an MBMS service providing procedure;
FIGs. 5A and 5B illustrate the configurations of PDCP entities for header compression;
FIG 6 illustrates an MBMS RB in an RNC according to a preferred embodiment of the present invention;
FIG. 7 illustrates a detailed structure of the PDCP entity for transmitting MBMS data to a plurality of cells according to the embodiment of the present invention;
FIG 8 is a flowchart illustrating an operation for configuring a common PDCP entity for one MBMS service according to an embodiment of the present invention;
FIG 9 is a flowchart illustrating an operation for processing MBMS data in the PDCP entity according to an embodiment of the present invention;
FIG 10 illustrates the configuration and operation of the PDCP entity for selectively transmitting an MBMS control packet according to an embodiment of the present invention;
FIG 11 illustrates a processing chain for processing MBMS data in an RNC according to an embodiment of the present invention;
FIG 12 illustrates a detailed configuration of the common RLC entity according to an embodiment of the present invention;

FIG 13 is a flowchart illustrating an operation for configuring the common RLC entity according to an embodiment of the present invention;

FIG 14 is a flowchart illustrating an operation for processing data received from an upper layer in the common RLC entity according to an embodiment of the present invention;

FIG 15 illustrates a common RLC entity according to another embodiment of the present invention;

FIG 16 is a flowchart illustrating an operation for configuring the common RLC entity according to an embodiment of the present invention;

FIG 17 is a flowchart illustrating an operation for processing data received from an upper layer in the common RLC entity according to an embodiment of the present invention;

FIG 18 illustrates the configuration of a common RLC entity according to an embodiment of the present invention; and

FIG 19 is a flowchart illustrating an operation for configuring the common RLC entity according to an embodiment of the present invention.

Preferred embodiments of the present invention will be described herein below with reference to the accompanying drawings. In the following description, well-known functions or constructions are not described in detail since they would obscure the invention in unnecessary detail.

The present invention provides an MBMS RB configuration that reduces RNC processing load by using only one layer entity, even when an MBMS RB for processing MBMS data is configured across a plurality of cells on the Uu interface between an RNC and a UE. The MBMS RB is a set of PDCP/RLC/MAC/PHY layers that process MBMS data received via a lu interface in a form suitable for transmission on the Uu interface.

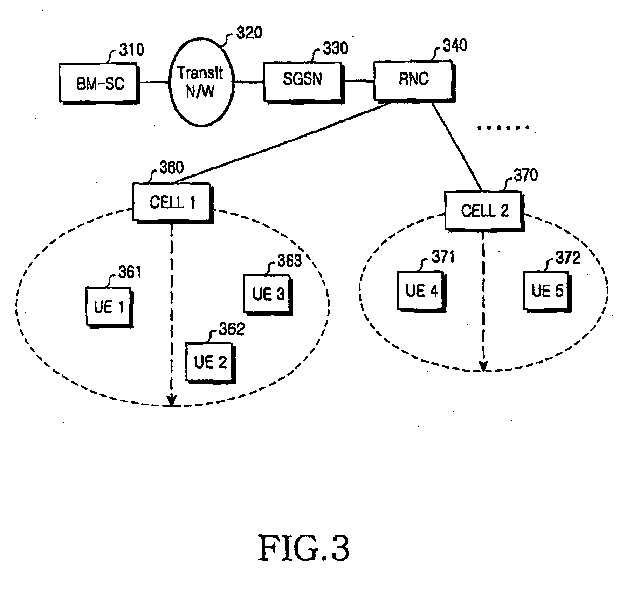

FIG 3 illustrates a simplified configuration of an MBMS mobile communication system for providing an MBMS service based on the 3rd generation asynchronous mobile communication standard of 3GPP (3rd Generation Project Partnership). Referring to FIG. 3, UEs 361, 362, 363, 371, and 372 are terminal devices or subscribers capable of receiving an MBMS service. A first cell 360 (cell 1) and a second cell 370 (cell 2) are base station devices that transmit MBMS-related data to subscribers. As illustrated in FIG 3, only one radio channel is established between cell 1 and the UEs 361, 362, and 363. An RNC 340 is a radio network controller that controls a plurality of cells. More specifically, the RNC 340 selectively transmits multimedia data to a particular cell and controls a radio channel established for an MBMS service.

An SGSN (Serving GPRS Supporting Node) 330 controls MBMS-related services for each subscriber. Its major control operations are management of billing data for services provided to each subscriber and selective transmission of multimedia data to a particular RNC. A transit network (N/W) 320 provides a path between a BM-SC (Broadcast/Multicast Service Center) 310 and the SGSN 330. The transit N/W 320 may be configured to have a GGSN (Gateway FPRS Support Node) and an external CN. The BM-SC 310 is a source of MBMS data and schedules data for each service.

An MBMS data stream generated from the BM-SC 340 is delivered to the UEs 361, 362, 363, 371, and 372 through the transit N/W 320, the SGSN 330, the RNC 340, and the cells 360 and 370. While not shown, a plurality of SGSNs may exist for one MBMS service and a plurality of RNCs may exist for each SGSN. An SGSN selectively transmits data to an RNC and the RNC selectively transmits data to cells. As a result, a list of destinations (i.e., an RNC list in an SGSN and a cell list in an RNC) must be stored and MBMS data is selectively transmitted to the destinations referring to the stored list.

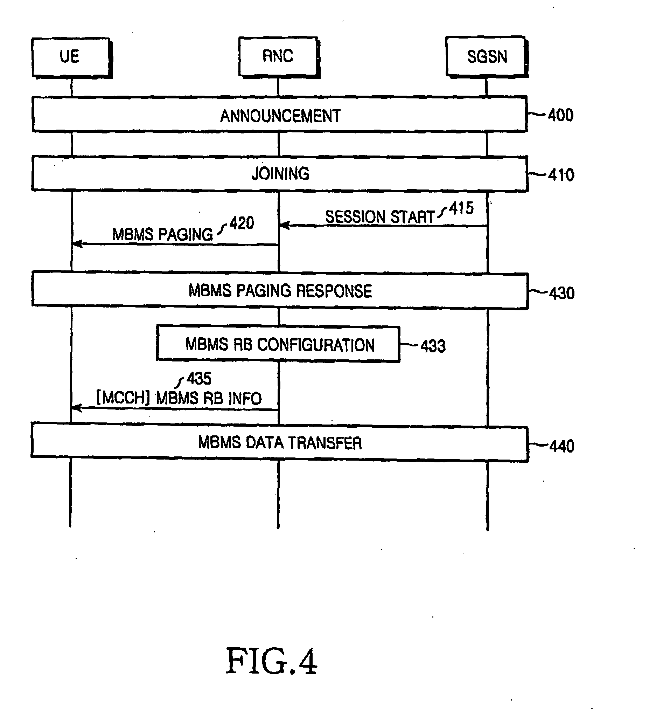

FIG 4 is a diagram illustrating a signal flow for an MBMS service providing procedure. To describe an example of an MBMS service providing procedure in a cell, a signal flow among a UE that receives an MBMS service, an RNC, and an SGSN is illustrated.

Referring to FIG 4, in step 400, the SGSN notifies the UE through the RNC of basic information about the MBMS service, for example, the IDs of MBMS services and information indicating whether the MBMS services are available (Announcement). If the MBMS services include an MBMS service the UE requests, in step 410, the UE notifies the SGSN through the RNC that it will join the intended MBMS service (Joining).

In the joining step 410, the UE notifies the SGSN of the ID of the intended MBMS service. The SGSN authenticates the UE and notifies the UE whether the MBMS service is available to the UE, by exchanging an Activate MBMS Context Request message and an Activate MBMS Context Accept message. The SGSN stores a list of UEs that want the particular MBMS service and their locations.

When a BM-SC announces the initiation of the MBMS service, the SGSN transmits a Session Start message to the RNC having the UE within its coverage area in step 415. In step 420, the RNC transmits an MBMS Paging message to the UE on a common channel, such as an S-CCPCH (Secondary Common Control Physical Channel), to page the UE. Because a plurality of UEs that join the MBMS service are paged by the MBMS Paging message, step 420 is called group paging, in contrast to a conventional paging procedure.

In step 430, the UE transmits an MBMS Paging Response for the paging. As a result, the RNC receives knowledge of the number of UEs requesting to receive the MBMS in each cell and determines the type of a radio channel (i.e., service type) for each cell. That is, if the number of UEs that want the MBMS service is equal to or larger than a predetermined threshold, the MBMS service is provided to them on a common channel in a PtM mode. If the number is less than the threshold, dedicated channels are established for the respective UEs and the MBMS service is provided to the UEs on the dedicated channels in a PtP mode. Step 430 is performed by exchanging control messages between the RNC and the UE, or between the SGSN and the UE.

When the service type is determined as PtP, the MBMS service is provided in the same manner as the conventional unicast service. However, when the service type is PtM, a connection between an RNC and a plurality of UEs must be established.

In step 433, the RNC configures an MBMS RB for providing the MBMS service to the plurality of UEs. The MBMS RB is related to a radio channel that will deliver the MBMS service. The RNC transmits MBMS RB configuration information to the UEs on MBMS control channels (MCCHs) in step 435. The MBMS RN configuration information contains, for example, OVSF (Orthogonal Variable Spreading Factor) code information, transport format information, RLC information, PDCP information, etc.

Typically, one MCCH is configured for each cell and mapped onto a common channel such as the S-CCPCH. The UEs acquire information on the MCCHs as system information. In step 440, the UE receives MBMS data according to the MBMS RB configuration information.

A UTRAN provides data for a service in a hierarchical structure of PDCP/RLC/MAC/PHY. The RDCP/RLC/MAC layer is in an RNC, and the PHY layer is in a Node B. For an MBMS service, UEs that want the same MBMS service may be located in different cells. In this case, MBMS data must bc delivered to the cells.

However, configuring of PDCP/RLC/MAC/PHY entities for each cell to provide the MBMS service is very inefficient. In practice. MBMS data that an upper-layer network element (e.g., SGSN) provides to the RNC is processed equally in the upper layers of PDCP and RLC, and then processed differently according to cells in the lower layers. Therefore, one common layer entity is configured for one MBMS service in an RNC and lower-layer entities operate separately for the respective cells in the present invention.

A significant data process in the PDCP entity is header compression/decompression. In an MBMS service provided over an IP network, MBMS data is IP/CTDP (User Datagram Protocol)/RTP (Real-time Transfer Protocol) packets because the most important application for the MBMS service is a multimedia streaming service and the most prominent scheme for provisioning of the multimedia streaming service is IP/UDP/RTP. An IP/UDP/RTP packet includes an IP header, a UDP header, and an RTP header, which occupy 40 to 60 bytes. Therefore, the IP/UDP/RTP packet is too bulky for wireless transmission.

The PDCP entity compresses IP/UDP/RTP header of a transmission data packet to several bytes by removing static fields from its header and transmits the compressed data packet to the lower RLC layer. It recovers a compressed header of a received data packet referring to a pre-stored header context. For example, a header compression technique called ROHC (Robust Header Compression) is applied to the MBMS. As a result, the PDCP entity that processes MBMS data is provided with an ROHC header compressor and decompressor. The same header compression technique is used for the same MBMS service.

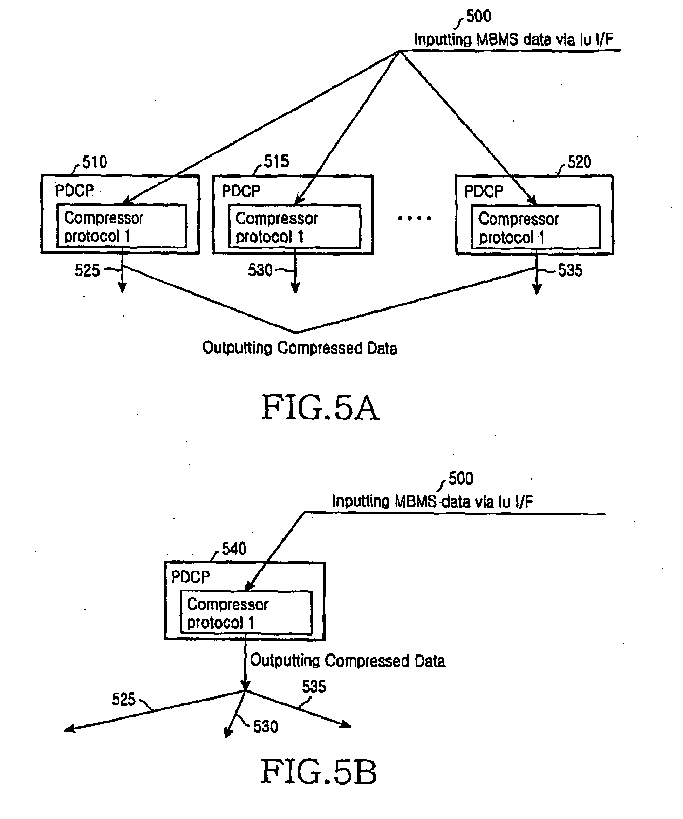

FIGs. 5A and 5B illustrate the configurations of PDCP entities for header compression. FIG 5A illustrates header compression using a PDCP entity for each cell. Each PDCP entity is provided with a header compressor 510, 515, or 520. If the header compressors 510, 515, and 520 in different cells are configured to process the same MBMS data, the MBMS data is equally input to the compressors 510, 515, and 520 via an lu interface and the compressors 510, 515, and 520 compress the MBMS data by the same header compression protocol. The same compressed data 525, 530, and 535 are output from the header compressors 510, 515, and 520.

FIG. 5B illustrates compression of the header of MBMS data 500 in a single header compressor 540 and delivery of the compressed data to cells. Although one PDCP entity is used for a plurality of cells, the same compressed header data 525, 530, and 535 is delivered to the cells.

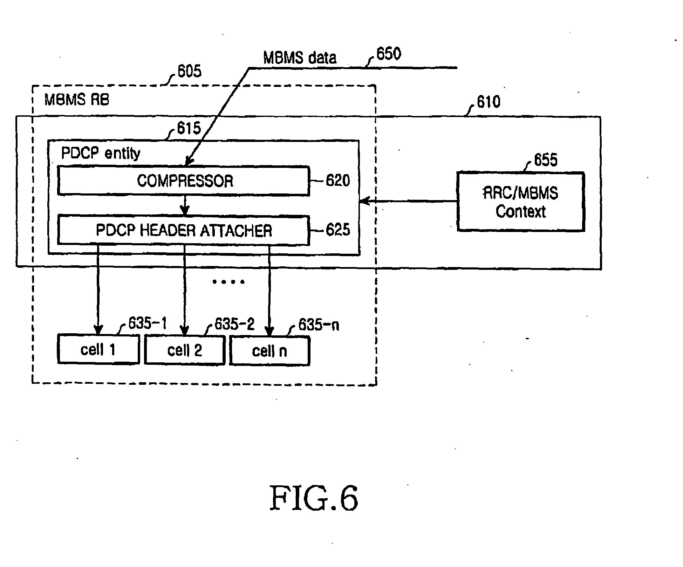

FIG. 6 illustrates an MBMS RB 605 in an RNC 610 according to a preferred embodiment of the present invention. The MBMS RB 605 is configured to broadcast data for a particular MBMS service to n cells.

Referring to FIG 6, the MBMS RB 605 includes a PDCP entity 615, which is common to n cells 635-1 to 635-n, for which MBMS data 650 is destined. The PDCP entity 615 has a header compressor 620 and a PDCP header attacher 625. The header compressor 620 compresses the header of a data packet received via a lu interface based on a pre-configured RRC/MBMS context 655. The PDCP header attacher 625 attaches a PDCP header to the compressed data. The output data of the PDCP entity 615 is provided to the cells 635-1 to 635-n.

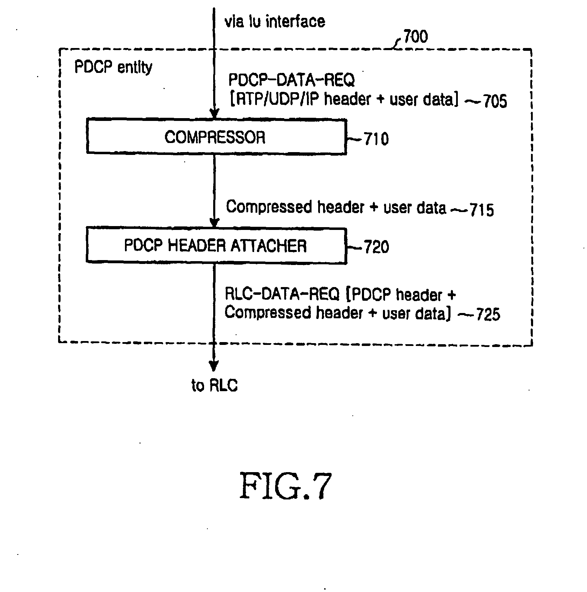

FIG. 7 illustrates a detailed structure of the PDCP entity for transmitting MBMS data to a plurality of cells according to an embodiment of the present invention. Referring to FIG. 7, after receiving a PDCP-DATA-REQ primitive 705, 5 which includes data for a particular MBMS service, via a lu interface, a PDCP entity 700 constructs an RLC-DATA-REQ primitive destined for an RLC SAP. An SAP refers to an access point between the PDCP layer and the RLC layer. That is, transmission of data through an SAP means transmission of data to a corresponding RLC entity.

More specifically, the PDCP-DATA-REQ primitive 705 includes upper-layer protocol headers and user data. The upper-layer protocols can be RTP/UDP/IP or UDP/IP, but RTP/UDP/IP is utilized herein for better understanding of the present invention. The user data is data to be transmitted to 5 actual UEs via Uu interfaces. For example, the user data is video data.

Upon input of the PDCP-DATA-REQ primitive 705, a header compressor 710 compresses the RTP/UDP/IP header included in the PDCP-DATA-REQ primitive 705 by a predetermined header compression protocol and transmits the compressed header and the user data to a PDCP header inserter 720. The header compression protocol can be robust header compression (ROHC) or RFC2507. The header compressor 710 selects a header compression protocol to be used under the control of the RRC layer. The PDCP entity 700 has a different header compressor for each service. Information about each header compressor is transmitted to a receiver in a PDCP header field.

The PDCP header inserter 720 inserts a 1-byte PDCP header into data 715 received from the header compressor 710, thereby creating an RLC-DATA-REQ primitive 725. The RLC-DATA-REQ primitive 725 includes the PDCP header and PDCP data with the compressed header and the user data. The PDCP header includes a PDU (Protocol Datagram Unit) Type field and a PID (Packet Identifier) field. The PDU Type field indicates whether the RLC-DATA-REQ primitive 725 is data compressed by a header compression protocol or data including additional information for supporting lossless SRNS relocation. If the RLC-DATA-REQ primitive 725 is compressed data, the PID field contains additional information related to header compression. For example, the type of the used header compression protocol and CID (Context Identifier), which is the ID of a header context (HC), are written in the PID field. The RLC-DATA-REQ primitive 725 is transmitted to the RLC layer and then distributed to a plurality of cells.

Upon receiving MBMS Paging Response messages from UEs that join a particular MBMS service, an RNC determines to provide the MBMS service to the cells having the UEs within their coverage areas and stores information about the MBMS service as an MBMS Context (655 in FIG 6). The MBMS Context includes information related to the MBMS service, for example, a list of the UEs that want the MBMS service, a list of the cells to which the MBMS service is to be provided, information about a PHY entity for each of the cells (code and frequency information, etc.), information about RLC and MAC entities for each of the cells (e.g. transport format combination information), and PDCP entity information.

The RNC configures an MBMS RB referring to the cell list in the MBMS Context. Configuring the MBMS RB means that PHY/MAC/RLC/PDCP entities are configured for each of the cells to which the MBMS service is to be provided. The PHY entities are configured in Node Bs corresponding to the cells.

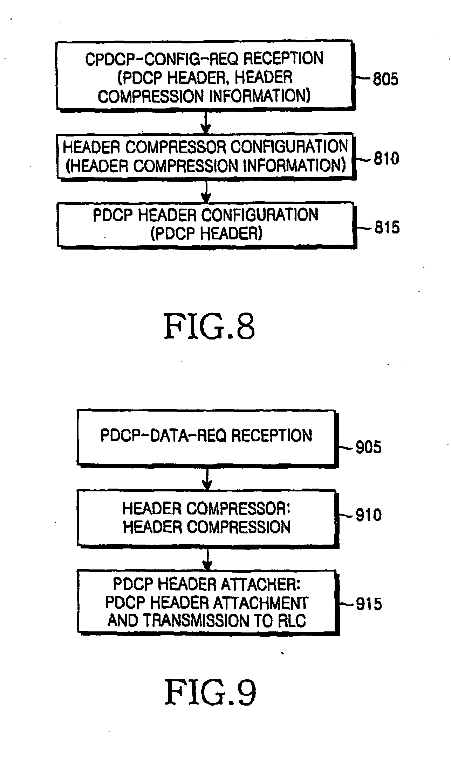

FIG 8 is a flowchart illustrating an operation for configuring a PDCP entity for one MBMS service common by a plurality of cells according to the embodiment of the present invention. Referring to FIG. 8, the PDCP layer receives a CPDCP-CONFIG-REQ primitive from the RRC layer in step 805. The CPDCP-CONFIG-REQ primitive includes parameters such as PDCP header information and header compression information. The header compression information is information needed to configure a header compressor and the PDCP header information is information needed to configure a PDCP header inserter.

In step 810, the PDCP layer configures a header compressor using the header compression information. The header compression information has a header compression protocol type and parameters required to configure the header compressor using a corresponding protocol. For example, to configure an ROHC header compressor, the header compression information contains ROHC-related configuration information, that is, profiles that the header compressor supports and a maximum CID value for header compression. The profiles refer to protocols that can be compressed by ROHC (i.e. IP/UDP/RTP or IP/UDP). The ROHC header compressor can be configured to support at least one of the three protocols.

In step 815, the PDCP layer configures a PDCP header inserter using the PDCP header information. The PDCP header information is "present" or "not present" indicating whether a PDCP header is to be attached or not, respectively. More specifically, if the PDCP header information is "present", a PDCP header inserter is configured and if it is "not present", the PDCP header inserter is not configured.

FIG 9 is a flowchart illustrating an operation for processing MBMS data in the thus-configured PDCP entity according to an embodiment of the present invention. Referring to FIG 9, upon receiving MBMS data via the lu interface, the RNC delivers the MBMS data in the form of a PDCP-DATA-REQ primitive to the PDCP entity in step 905. The PDCP-DATA-REQ primitive includes an RTP/UDP/IP header and user data, and is transmitted to the header compressor of the PDCP entity.

In step 910, the header compressor compresses the RTP/UDP/IP header by a predetermined header compression protocol, such as ROHC, and transmits the compressed header and the user data to the PDCP header inserter.

The PDCP header inserter attaches a PDCP header having a PDU Type field and a PID field to the received data. The resulting data is called an RLC-DATA-REQ primitive. If the PDCP entity is configured not to have a PDCP header inserter, step 915 is not performed and the processed data of the header compressor becomes the RLC-DATA-REQ primitive. The RLC-DATA-REQ primitive is transmitted to the RLC layer to be delivered to a plurality of cells.

The thus-configured MBMS RB is characterized in that one lower-layer entity is configured for each cell and one common PDCP entity is configured for the lower-layer entities. Therefore, header compression occurs only once in the PDCP entity, thereby reducing RNC processing load.

For example, if a plurality of UEs in cells A, B, and C are to receive a particular MBMS service, the RNC configures an MBMS RB having one PDCP entity to provide the MBMS service, and transmits MBMS data to cells A, B, and C via the MBMS RB. Upon receiving a request for the MBMS service from cell D, the RNC configures new lower-layer entities to process data for cell D and transmits the MBMS data to the existing PDCP layer.

Every header compression protocol works normally under the situation in which a header compressor and a header decompressor share basic information needed for header compression and decompression. The basic information includes static field values, which are unchanged during the service, and default values of regularly changing fields. A full header packet in RFC 2507 and an IR (Initializing & Refresh) or IR-DYN (Initializing and Refresh Dynamic) packet in ROHC provide such basic information. The header compressor transmits the basic information to the header decompressor before header compression and decompression. An ROHC header compressor initially transmits an IR packets several times, thereby providing basic information to header decompressors in UEs. According to the present invention, the PDCP layer identifies these special packets and selectively transmits the RLC-DATA-REQ primitive only to a particular cell.

The basic information required for the header compressor and the header decompressor in the PDCP layer to compress and decompress a header normally is divided into a static part and a dynamic part. The static and dynamic parts are field values in header to be compressed and decompressed. The static part refers to field values that are not changed, whereas the dynamic part refers to changing field values. An IR packet is transmitted before ROHC header compression and decompression. The IR packet contains the static and dynamic parts. An IR-DYN packet is used to retransmit field values of the dynamic part.

While transmission of ROHC IR and IR-DYN packets will be described for illustrative purposes, it should be noted that the present invention is also applicable to transmission of a control packet for an MBMS service to a particular cell and a particular UE.

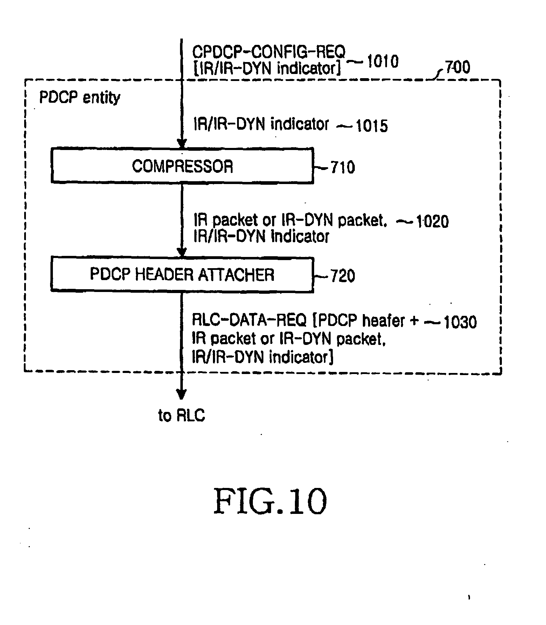

FIG 10 illustrates the configuration and operation of the PDCP entity 700 for selectively transmitting an MBMS control packet according to an embodiment of the present invention. Upon receiving a CPDCP-CONFIG-REQ primitive 1010 including an IR/IR-DYN indicator 1015 from the RRC layer, the received CPDCP-CONFIG-REQ primitive 1010 is fed to the header compressor 710. The IR/IR-DYN indicator 1015 indicates whether a control packet selectively transmitted to a particular cell is an IR packet or an IR-DYN packet.

Referring to FIG. 10, the header compressor 710 constructs an IR or IR-DYN packet according to the value of the IR/IR-DYN indicator 1015 and transmits the packet together with the IR/IR-DYN indicator 1015 to the PDCP header inserter 720. The PDCP header inserter 720 generates an RLC-DATA-REQ primitive 1030 by inserting a PDCP header to the data 1020 received from the header compressor 710 and transmits the RLC-DATA-REQ primitive 1030 to the cell.

The RLC layer participates in scheduling for each cell by exchanging control information with the MAC layer. Because the scheduling is performed based on the channel status of each cell, an RLC entity must be configured for each cell. In more detail, the RLC layer notifies the MAC layer of the amount of stored data at an arbitrary time point, and the MAC layer schedules based on the data state of the RLC layer and the channel state at the time point. The MAC layer notifies the RLC layer of the amount of data to receive and the RLC layer transmits as much data as requested to the MAC layer. The scheduling is performed for each cell. Therefore, the operations of a common RLC entity of an RNC for a plurality of cells will be described separately according to the present invention.

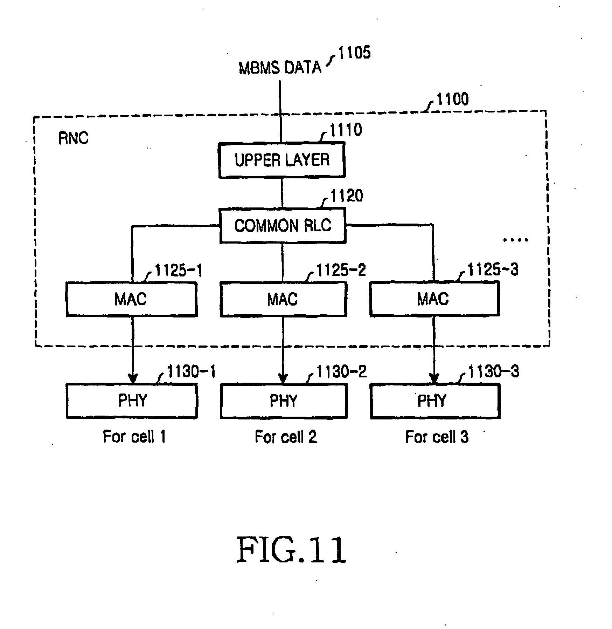

FIG. 11 illustrates a configuration of a processing chain for processing MBMS data in an RNC according to an embodiment of the present invention. When MBMS data is to be transmitted to a plurality of cells, an upper-layer entity 1110 such as a PDCP entity and a common RLC entity 1120 is configured and the RLC entity 620 is connected MAC entities 125-1 to 125-n for respective cells, thereby reducing an RLC buffer size. Although not shown, the upper-layer entity 1110 includes the above-described integrated PDCP entity and its upper-layer entity

The common RLC entity 1120 buffers data received from the upper-layer entity 1110, and reconstructs the buffered data according to sizes requested by the MAC entities 1125-1 to 1125-n. Then, the common RLC entity 1120 generates RLC PDUs of the requested sizes by attaching RLC headers to the reconstructed data, and transmits the RLC PDUs to corresponding MAC entities.

The operation is performed between the RLC entity 1120 and the MAC entities 125-1 to 125-n in a one-to-one correspondence. More specifically, being informed of a desired data amount from the MAC entity of a cell, the RLC entity 1120 transmits as much data as requested to the MAC entity.

The amount of data to be transmitted is determined according to cell status at a corresponding time point. For example, a first cell 1130-1 (cell 1) has a large amount of available downlink transmission resources and requests a large amount of data from the RLC entity 1120 and a second cell 1130-2 (cell 2) that has very little available downlink resources and requests a small amount of data from the RLC entity 1120. In the same manner, an nth cell 1130-n (cell n) requests a desired data amount to the RLC entity 1120.

The RLC entity 1120 transmits data to each cell, separately. For example, if the MAC entity 1125-1 of cell 1 requests as much data as a and the MAC entity 1125-2 of cell 2 requests as much data as b, the RLC entity 1120 transmits the requested data for both cells, separately.

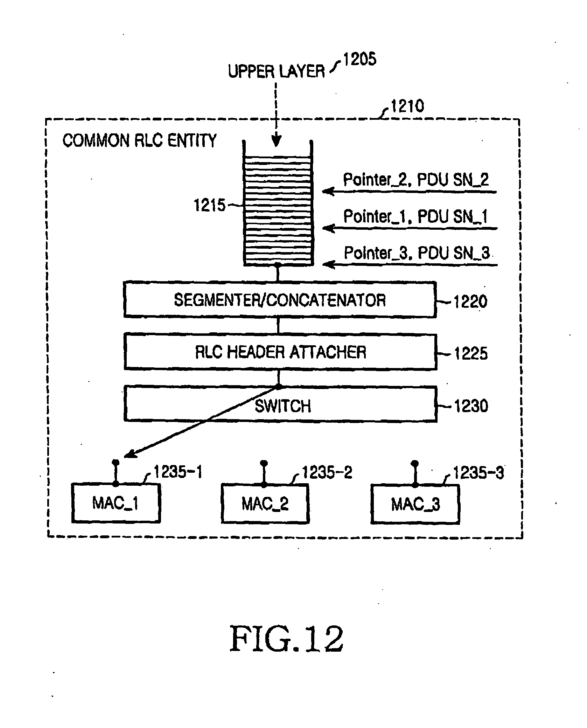

FIG. 12 illustrates a detailed configuration of a common RLC entity according to an embodiment of the present invention. A common RLC entity 1210 operating in a UM includes a common RLC buffer 1215, a segmenter/concatenator 1220, an RLC header attacher 1225, and a switch 1230.

When the RNC provides an MBMS service to a plurality of cells, the common RLC entity 1210 processes MBMS data received from an upper layer 1205 and transmits the processed MBMS data to the cells. In the illustrated case of FIG. 12, an MBMS service is provided to three cells and three MAC entities 1235-1, 1235-2, and 1235-3 are provided for the three cells. That is, the number of the MAC entities 1235-1, 1235-2, and 1235-3 is equal to that of the cells to which the MBMS service is provided.

The common RLC buffer 1215 stores the MBMS data and outputs it upon request from the MAC entities 1235-1, 1235-2, and 1235-3. That is, the MAC entities 1235-1, 1235-2, and 1235-3 notify the common RLC buffer 1215 of their desired data amounts for the respective cells and the common RLC buffer 1215 outputs the buffered MBMS data according to the requests. The common RLC buffer 1215 uses variables Pointer_x and PDU SN_x to manage the data transmission states of the respective cells. Herein, x represents a cell index.

Pointer_x indicates the start point of data to be transmitted to cell x. When the MBMS service starts to be provided to cell x, Pointer_x is initialized to the start address of the common RLC buffer 1215 and moves forward as far as the amount of data transmitted each time the data is transmitted to cell x. For example, if the common RLC buffer 1215 has 10000-bit data and 500-bit data and 300-bit data have been transmitted to cell x and cell y, respectively, Pointer_x points the $501^{th}$ bit position counted from the first bit position and Pointer_y points the $301^{th}$ bit position counted from the first bit position.

After transmitting the buffered data of the common RLC buffer 1215 to all the cells, it is discarded and all pointers move backward equally as far as the amount of the discarded data.

Herein below, a description will be made of the case in which the common RLC buffer 1215 is configured to support MBMS service a and stores 1000-bit data received from the upper layer 1205. The MBMS service a is provided to cell 1 and cell 2.

The common RLC buffer 1215 first initializes Pointer_1 and Pointer_2 to the first bit position. When 100 bits and 200 bits have been transmitted to cell 1 and cell 2, respectively, Pointer_1 moves to the $101^{th}$ bit position and Pointer_2 moves to the $201^{th}$ bit position. Because the first 100 bits were transmitted to all the cells being serviced, they are discarded from the RLC buffer 1215 and Pointer_1 and pointer_2 move backward as far as 100 bits. Consequently, 900 bits remain in the common RLC buffer 1215, Pointer_1 points the first bit position and Pointer_2 points the $101^{th}$ bit position.

The usage of PDU SN_x is illustrated in FIG. 3 and will be described later in more detail.

The segmenter/concatenator 1220 segments or concatenates the data received from the common RLC buffer 1215 to a predetermined size, PDU_size. The PDU_size information is received from the upper layer 1205.

The RLC header attacher 12225 creates RLC PDUs by attaching RLC headers to the segmented or concatenated data. Each of the RLC headers includes a Sequence Number (SN) and a Length Indicator (LI) needed to reassemble the segmented or concatenated data. The SN is 7 bits and the LI is variable but typically 16 bits. The RLC header attacher 1225 utilizes PDU SN_x received from the upper layer 1205 to determine the SNs of the RLC PDUs.

The switch 1230 switches the RLC PDUs received from the RLC header attacher 1225 to the MAC entities 1235-1 to 1235-n connected to the cells.

The above common RLC entity is configured during configuring the MBMS RB in the MBMS service procedure. Therefore, when configuring the MBMS RB, a MAC/PHY entity is configured for each cell to which the MBMS service is to be provided, and one upper-layer entity and one common RLC entity are configured. Because the PHY entity is configured in a Node B, a detailed description thereof is not provided here.

Referring to FIG 4, the RNC determines cells to which the MBMS service is to be provided and reflects the determination in the MBMS Context that it manages in step 430. The MBMS Context has information about the MBMS service. For example, it includes a list of UEs that want the MBMS service and a list of the cells to which the MBMS service is to be provided. The RNC configures MAC entities for the respective cells referring to the cell list and makes a MAC list using the IDs of the MAC entities (or MAC IDs). The MAC IDs identify the MAC entities in the RNC. Different types of MAC entities may exist in the RNC and the MAC IDs have unique values.

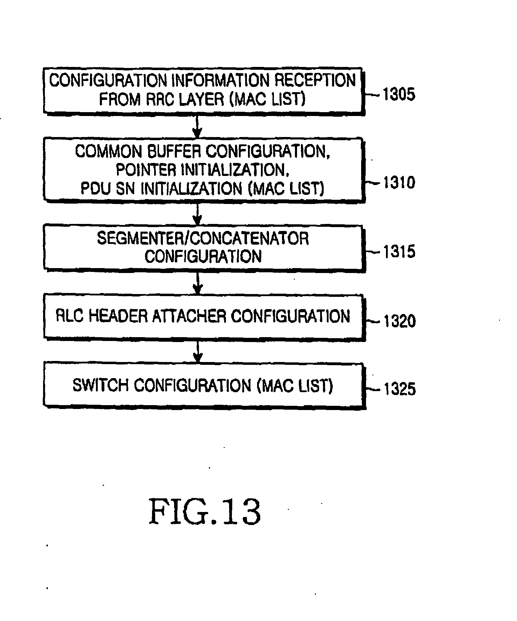

After complete configuration of the MAC entities, a common RLC entity is configured. FIG. 13 is a flowchart illustrating the operation for configuring the common RLC entity according to the embodiment of the present invention. Configuring the common RLC entity means that RLC MBMS information is provided to the common RLC entity corresponding to the RLC layer. The components illustrated in FIG 12 are configured based on the RLC MBMS information.

Referring to FIG 13, the RRC layer of the RNC transmits configuration information to the common RLC entity in step 1305. The configuration information contains a MAC list having MAC IDs. In step 1310, the common RLC entity configures the common RLC buffer using the MAC list. That is, pointers and PDU SNs are configured in a one-to-one correspondence to the MAC IDs, the pointers are set to an initial value 1, and the PDU SNs are set to an initial value 0.

If MAC_1, MAC_2 and MAC_3 are configured for cell 1, cell 2, and cell 3, respectively, as illustrated in FIG 12, the common RLC buffer configures Pointer_1 and PDU SN_1 and then sets them to their initial values 1 and 0, respectively. Also, the common RLC buffer configures Pointer_2 and PDU SN_2 and then sets them to their initial values 1 and 0, respectively. The common RLC buffer configures Pointer_3 and PDU SN_3 and then sets them to their initial values 1 and 0, respectively

In step 1315, the common RLC entity configures the segmenter/concatenator. The segmenter/concatenator is a function block for concatenating or segmenting data to a size set by the common RLC buffer. The common RLC entity configures the RLC header attacher in step 1320. The RLC header attacher is a function block for generating an RLC header including corresponding information under the control of the common RLC buffer. In step 1325, the common RLC entity configures the switch using the MAC list. Accordingly, the switch switches to MAC entities corresponding to the MAC IDs in the MAC list.

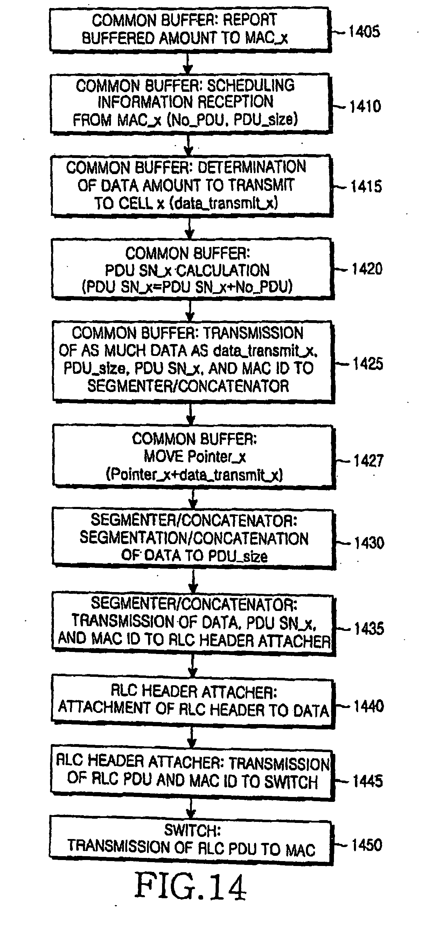

FIG 14 is a flowchart illustrating an operation for processing data received from an upper layer in the common RLC entity according to an embodiment of the present invention. While only the operation of the common RLC entity for the MAC entity of cell x, MAC_x is illustrated, it is to be appreciated that this operation is carried out for all the MAC entities connected to the common RLC entity through the switch.

Referring to FIG 14, the common RLC buffer notifies MAC_x of the amount of data buffered in the common RLC buffer and destined for cell x, buffer_status_x in step 1405. The buffer_status_x is calculated by Equation (1),

$$ \text{buffer\_status\_x} = \text{common\_buffer\_total} - \text{Pointer\_x} \qquad .....(1) $$

where common_buffer_total is the total amount of data stored in the common RLC 5 buffer and Pointer_x is the amount of buffered data that has already been transmitted to cell x. MAC_x, upon receipt of the buffer_status_x information, determines the amount of data allowed for MBMA service a based on the radio channel status of cell x. If cell x is congested, a small amount of data is allowed. However, if cell x is not congested, a large amount of data is allowed.

In step 1410, MAC_x determines PDU_size and the number of PDUs to receive, No_PDU, and transmits the determined information to the common RLC buffer. In step 1415, the common RLC buffer determines the amount of data to be transmitted to cell x by Equation (2).

$$ \text{data\_transmit\_x} = \text{No\_PDUx}(\text{PDU\_size} - \text{RLC header size}) \qquad ....(2) $$

The common RLC buffer calculates PDU SN_x in step 1420. PDU SN_x is the sum of the previous PDU SN_x and No_PDU. In step 1425, the common RLC buffer transmits, to the segmenter/concatenator, as much data as data_transmit_x starting from a position Pointer_x points. The common RLC buffer moves Pointer_x forward as far as data_transmit_x in step 1427.

In step 1430, the segmenter/concatenator segments or concatenates the received data to PDU_size. The segmenter/concatenator transmits the segmented or concatenated data together with PDU SN_x and a MAC ID to the RLC header attacher in step 1435.

In step 1440, the RLC header attacher generates RLC PDUs by attaching RLC headers to the received data. In the same step, the RLC header attacher sets the RLC SNs of the RLC PDUs such that the RLC SN of the last RLC PDU is (PDU SN_x)-1. For example, if five data are received and PDU SN_x is 10, the data is sequentially numbered with SN 5, 6, 7, 8, and 9. In step 1445, the RLC header attacher transmits the RLC PDUs together with the MAC ID to the switch.

In step 1450, the switch transmits the RLC PDUs to MAC_x corresponding to the MAC ID. Then, the RLC PDUs are transmitted to cell x via MAC_x.

As described above, a transmission state is managed on a cell basis and the common RLC buffer transmits data to cells by communicating with the individual MAC entities of the cells. Accordingly, the common RLC entity can service all the cells by use of the single RLC buffer.

The configuration of the common RLC entity operating in the RLC UM has been described above as the first embodiment of the present invention. Herein below, the configuration of a common RLC entity operating in the RLC TM is presented as another embodiment of the present invention. In the RLC TM, the common, RLC entity does not perform segmentation/concatenation and RLC header attachment, as compared to the RLC UM. That is, data received from an upper layer is transmitted to a lower layer without processing according to an order from the MAC layer.

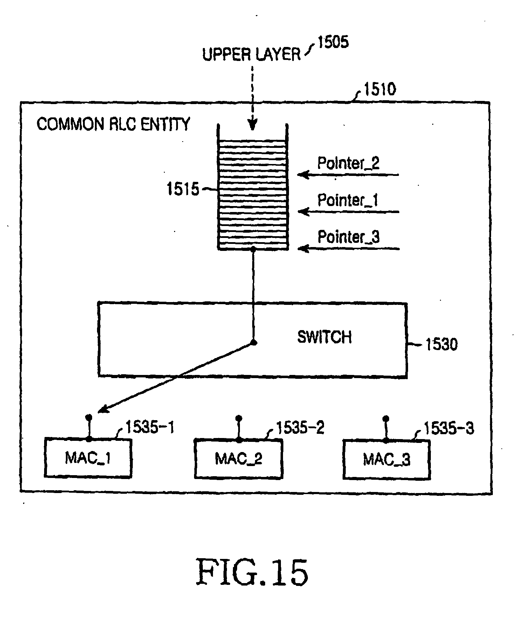

FIG. 15 illustrates the configuration of a common RLC entity according to another embodiment of the present invention. In the illustrated case, an MBMS service is provided to three cells. As illustrated in FIG 15, a common RLC entity 1510 includes a common RLC buffer 1515 and a switch 1530. The common RLC buffer 1515 does not use the variable PDU SN_x but manages the variable Pointer_x according to an RLC PDU.

Referring to FIG 15, the common RLC buffer 1515 stores MBMS data 1505 and transmits the data to the next component upon request from three MAC entities 1535-1, 1535-2, and 1535-3 of the cells. That is, the common RLC buffer 1515 is informed of data amounts requested by the MAC entities 1535-1. 1535-2, and 1535-3, and outputs data according to the requests.

The common RLC buffer 1515 manages data transmission for each cell. Accordingly, the common RLC buffer 1515 manages Pointer_x for each cell. The common RLC buffer 1515 stores data received from an upper layer 1505 in the form of packets called RLC SDUs (Service Data Units). In a TM, the common RLC entity 1510 does not support segmentation/concatenation. Therefore, RLC SDUs are identical to RLC PDUs. Consequently, data is buffered in RLC PDUs in the common RLC buffer 1515.

Pointer_x points the first RLC PDU to be transmitted to cell x. When the MBMS service starts, Pointer_x is set to the first address of the common RLC buffer 1515 and moves forward as far as the number of transmitted PDUs each time the PDUs are transmitted to cell x. For example, if 100 RLC PDUs are stored in the common RLC buffer 1515 and fiver PDUs have already been transmitted to cell x, and three PDUs have already been transmitted to cell y, Pointer_x points the sixth PDU and Pointer_y points the fourth PDU.

After the buffered PDUs in the common RLC buffer 1515 are completely transmitted to the connected cells, they are discarded and all the pointers move backward equally as far as the number of the discarded PDUs.

A description will be made herein below of the case in which the common RLC buffer 1515 is configured to support MBMS service a and stores 10 RLC PDUs received from the upper layer 1505. MBMS service a is provided to cell 1 and cell 2.

Referring to FIG 15, the common RLC buffer 1515 first initializes Pointer_1 and Pointer_2 to the first RLC PDU (i.e., the first RLC SDU). When one PDU and two PDUS have been transmitted to cell 1 and cell 2, respectively, Pointer_1 moves to the second PDU and Pointer_2 moves to the third PDU. Because the first PDU was transmitted to all the cells being serviced, it is discarded from the RLC buffer 1515 and Pointer_1 and Pointer_2 move backward one PDU. Consequently, 9 RLC PDUs remain in the common RLC buffer 1515, Pointer_1 points the first PDU and Pointer_2 points the second PDU.

The switch 1530 switches the RLC PDUs received from the common RLC buffer 1515 to the MAC entities 1535-1, 1535-2, and 1535-3 connected to the cells.

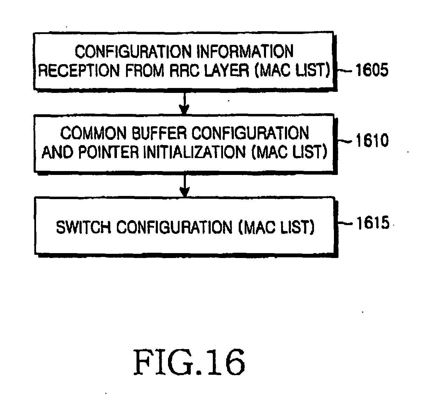

FIG 16 is a flowchart illustrating an operation for configuring the common RLC entity according to an embodiment of the present invention. After configuring MAC identities, the RNC starts to configure the common RLC entity.

Referring to FIG 16, the RRC layer of the RNC transmits configuration information to the common RLC entity in step 1605. the configuration information includes a MAC list. In step 1610, the common RLC entity configures the common RLC buffer using the MAC list. More specifically, pointers are created in a one-to-one correspondence to MAC IDs in the MAC list and set to an initial value 1.

In step 1615, the common RLC entity configures the switch using the MAC list. The switch establishes connections to the MAC entities corresponding to the MAC IDs in the MAC list. Accordingly, the common RLC entity for providing a particular MBMS service is completely configured.

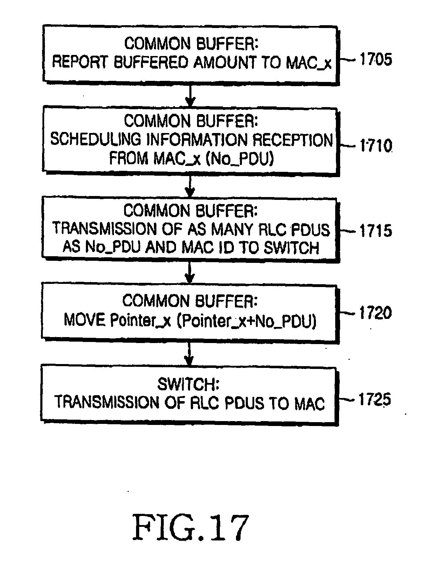

FIG 17 is a flowchart illustrating an operation for processing data received from an upper layer in the common RLC entity according to an embodiment of the present invention. While only the operation of the common RLC entity for the MAC entity of cell x, MAC_x is illustrated, it is to be appreciated that this operation is carried out for all the MAC entities connected to the common RLC entity through the switch.

Referring to FIG 17, the common RLC buffer notifies MAC_x of the number No_PDU_bufter_x of RLC PDUs destined for cell x and the size of the RLC PDUs in step 1705. No_PDU_buffer_x is (No_PDU_total-Pointe_ x). Here, No_PDU_total is the total number of buffered RLC PDUs and Pointer_x is the number of RLC PDUs that have already been transmitted to cell x.

Upon receipt of the No_PDU_buffer_x information, MAC_x determines how many RLC PDUs are to be allowed for MBMA service a based on the radio channel status of cell x. If cell x is congested, a small number of RLC PDUs are allowed. However, if cell x is not congested, a large number of RLC PDUs are allowed.

In step 1710, MAC_x determines the number of RLC PDUs to receive, No_PDU, and transmits the determined information to the common RLC buffer. In step 1715, the common RLC buffer transmits as many RLC PDUs as No_PDU, starting from the RLC PDU that Pointer_x points. At the same time, the MAC ID is also transmitted to the switch. The common RLC buffer moves Pointer_x forward as far as No_PDU in step 1720.

In step 1725, the switch transmits the RLC PDUs to MAC_x corresponding to the MAC ID. Then, the RLC PDUs are transmitted to cell x via MAC_x.

While the above embodiments advantageously reduce buffer capacity requirements, some require repeated segmentation/concatenation and header attachment for a plurality of cells. To solve this problem, a common segmenter/concatenator and a common RLC header attacher are used for a plurality of cells in another embodiment of the present invention. According to an embodiment of the present invention, the same SN is used for the cells and RLC SDUs are equally segmented or concatenated for the cells. MBMS data is stored in a buffer for each of cells related to the MBMS service.

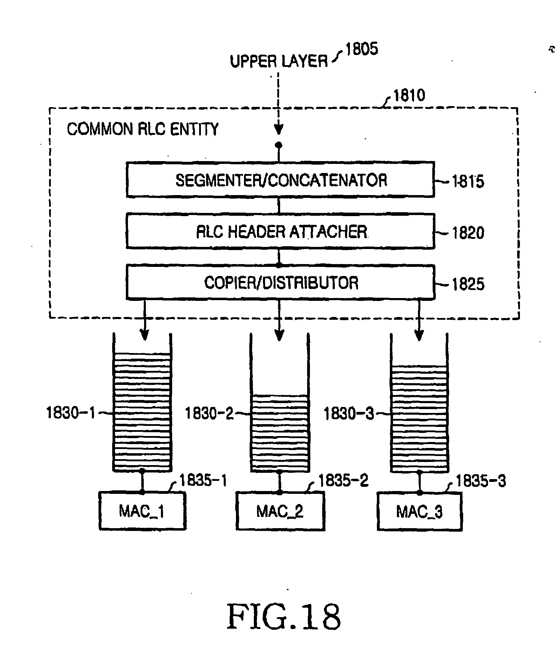

FIG. 18 illustrates the configuration of a common RLC entity according to another embodiment of the present invention. As illustrated in FIG 18, a common RLC entity 1810 includes a segmenter/concatenator 1815, an RLC header attacher 1820, and a copier/distributor 1825. The copier/distributor 1825 is connected to buffers 1830-1, 1830-2, and 1830-3 provided to respective cells. The common RLC entity 1810 operates in a UM.

When the RNC is to provide an MBMS service to a plurality of cells, the common RLC entity 1810 transmits MBMS data received from an upper layer 1805 to the cells. In FIG. 18, the MBMS service is provided to three cells and thus, three MAC entities 1835-1, 1835-2, and 1835-3 are provided for the three cells, respectively.

Referring to FIG. 18, the segmenter/concatenator 1815 segments or concatenates MBMS data (i.e., RLC SDUs) received from an upper layer 1805 to a predetermined size, PDU_size. The PDU_size information is received from the upper layer 1805.

The RLC header attacher 1820 creates RLC PDUs by attaching RLC headers to the segmented or concatenated data. Each RLC header includes an SN and an LI, which is information required to reassemble segmented or concatenated data. The SN is 7 bits and LI is variable, e.g., 16 bits.

The copier/distributor 1825 generates as many copies of the RLC PDUs received from the RLC header attacher 1820 as the number of cells to receive the MBMS service and transmits them to the buffers 1830-1, 1830-2, and 1830-3 corresponding to the respective cells.

The buffers 1830-1, 1830-2, and 1830-3 are connected to the MAC entities 1835-1. 1835-2, and 1835-3, respectively, and store the received same PDUs. As illustrated in FIG 18, if an MBMS service is provided to three cells, the three MAC entities 1835-1, 1835-2. and 1835-3 are configured for the cells in a one-to-one correspondence to the buffers 1830-1, 1830-2, and 1830-3.

The buffers 1830-1, 1830-2, and 1830-3 notify the MAC entities 1835-1, 1835-2, and 1835-3 of the amounts of buffered data and, upon request from a MAC entity, a corresponding buffer transmits buffered data to the MAC entity. More specifically, the MAC entities 1835-1, 1835-2, and 1835-3 notify the buffers 1830-1, 1830-2, and 1830-3 of their desired data amounts, and the buffers 1830-1, 1830-2, and 1830-3 transmit as many RLC PDUs as requested to the MAC entities 1835-1, 1835-2, and 1835-3.

This embodiment of the present invention is characterized in that the same RLC SN is used for cells receiving an MBMS service and MBMS data is equally segmented or concatenated for the cells.

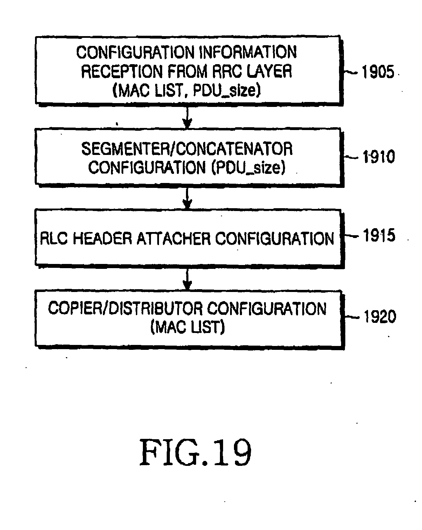

FIG. 19 is a flowchart illustrating the operation for configuring the common RLC entity according to an embodiment of the present invention. After configuring MAC entities, the RNC starts to configure the common RLC-entity.

Referring to FIG 19, the RRC layer of the RNC transmits configuration information to the common RLC entity in step 1905. The configuration information includes a MAC list having the IDs of lower-layer MAC entities and PDU_size. In accordance with the present invention, only one PDU_size is used. PDU_size is the only requirement unless otherwise specified. For a packet size PDU_size is usually 320 bits.

In step 1910, the common RLC entity configures the segmenter/concatenator using PDU_size. The segmenter/concatenator is a function block for concatenating or segmenting data to PDU - size. The common RLC entity configures the RLC header attacher in step 1915. The RLC header attacher is a function block for generating an RLC header including corresponding information under the control of the common RLC buffer.

In step 1920, the common RLC entity configures the copier/distributor using the MAC list and connects them to the buffers for the respective cells. The copier/distributor generates as many copies of input RLC PDUs as the number of the buffers and transmits them to the buffers. Each of the buffers stores the RLC PDUs and transmits them to a corresponding MAC entity upon request from the MAC entity. More specifically, each of the buffers notifies a corresponding MAC entity of the amount of buffered data. The MAC entity determines how much data is to be received according to the status of a corresponding cell and requests the decided data amount to the buffer. The buffer then provides as many RLC PDUs as requested to the MAC entity.

**Claims**

1. A method of providing an MBMS (Multimedia Broadcast/Multicast Service) service to UEs (User Equipments) within a plurality of cells in a mobile communication system, comprising the steps of:

   receiving upper-layer protocol data including an upper-layer protocol header and user data for the MBMS service;
   compressing the upper-layer protocol header by a predetermined header compression protocol that is common to the plurality of cells;
   generating lower-layer protocol data by attaching a PDCP (Packet Data Control Protocol) header to the compressed header and the user data, wherein the PDCP header represents the header compression protocol; and

transmitting the lower-layer protocol data to lower-layer entities corresponding to the cells.

2. The method of claim 1, wherein the upper-layer protocol header is an RTP (Real-time Transfer Protocol)/UDP (User Datagram Protocol)/IP (Internet Protocol) header.

3. The method of claim 1, wherein the upper-layer protocol header is a UDP/IP header.

4. The method of claim 1, further comprising the steps of:

receiving a request message that requests transmission of a control packet for the MBMS service to one of the cells;
generating the control packet according to the request message;
generating lower-layer protocol data by attaching a PDCP header to the control packet; and
transmitting the lower-layer protocol data to a lower-layer entity corresponding to the cell among the lower-layer entities.

5. The method of claim 1, wherein the header compression protocol is ROHC (Robust Header Compression).

6. The method of claim 5, further comprising the steps of:

receiving a request message from one of the cells, wherein the request message includes an indicator that indicates one of an ROHC initializing & refresh (IR) packet and an initializing & refresh Dynamic (IR-DYN) packet;
generating the one of the ROHC IR packet and the IR-DYN packet according to the indicator;
generating lower-layer protocol data by attaching a PDCP header to the one of the ROHC IR packet and the IR-DYN packet; and
transmitting the lower-layer protocol data to a lower-layer entity corresponding to the cell among the lower-layer entities.

7. The method of claim 1, wherein the method is performed by a PDCP entity common to the cells and specific to the MBMS service.

8. The method of claim 1, further comprising the steps of:

receiving the lower-layer protocol data;
buffering the received lower-layer protocol data in a buffer common to the cells; and
upon receiving a request from one of the lower-layer entities corresponding to the cells, transmitting the buffered data to the lower-layer entity.

9. The method of claim 8, further comprising the step of discarding data transmitted to all the lower-layer entities among the buffered data from the common buffer.

10. The method of claim 8, further comprising the step of notifying the lower-layer entities of amounts of buffered data to be transmitted to the lower-layer entities.

11. The method of claim 8, further comprising the steps of:

managing pointers corresponding to the lower-layer entities for the common buffer;
upon receiving a request indicating a data amount to receive from one of the lower-layer entities, determining an amount of data to be transmitted to the lower-layer entity based on the requested data amount;
transmitting as much data as the determined amount to the lower-layer entity; and
decreasing the value of a pointer corresponding to the lower-layer entity by the determined amount.

12. The method of claim 11, wherein the step transmitting the buffered data comprises the steps of:

segmenting the data output from the buffer to a predetermined data size;
attaching an RLC (Radio Link Control) header having a sequence number (SN) to the segmented data; and
transmitting the RLC header-attached data to the lower-layer entity.

**13.** The method of claim 11, wherein the step of transmitting the buffered data comprises the steps of:

concatenating the data output from the buffer to a predetermined data size;
attaching an RLC (Radio Link Control) header having a sequence number (SN) to the concatenated data; and
transmitting the RLC header-attached data to the lower-layer entity.

**14.** The method of claim 1, further comprising the steps of:

receiving the lower-layer protocol data;
buffering the received lower-layer protocol data in buffers corresponding to the cells; and
transmitting to one of the lower-layer entities the buffered data of a buffer corresponding to the lower-layer entity, upon request from the lower-layer entity.

**15.** The method of claim 14, further comprising the step of notifying each of the lower-layer entities of an amount of data buffered in the buffer corresponding to the lower-layer entity.

**16.** The method of claim 14, wherein the step of transmitting the buffered data comprises the steps of:

receiving a request indicating a data amount to receive from one of the lower-layer entities,
determining the amount of data to be transmitted to the lower-layer entity based on the requested data amount; and
transmitting to the lower-layer entity as much data as the determined amount from the buffer corresponding to the lower-layer entity.

**17.** The method of claim 14, wherein the step of transmitting the buffered data comprises the steps of:

segmenting the data output from the buffer to a predetermined data size;
generating a PDU (Packet Data Unit) by attaching an RLC header having a sequence number (SN) to the segmented data; and
transmitting the PDU to the lower-layer entity.

**18.** The method of claim 14, wherein the step of transmitting the buffered data comprises the steps of:

concatenating the data output from the buffer to a predetermined data size;
generating a PDU (Packet Data Unit) by attaching an RLC header having a sequence number (SN) to the concatenated data; and
transmitting the PDU to the lower-layer entity.

**19.** A method of configuring a common device for a plurality of cells to provide an MBMS (Multimedia Broadcast/Multicast Service) service to UEs (User Equipments) within the plurality of cells in a mobile communication system, comprising the steps of:

receiving (805) a configuration request message having PDCP (Packet Data Control Protocol) header information and header compression information;
configuring (810) a header compressor using the header compression information, for receiving upper-layer protocol data including an upper-layer protocol header and user data for the MBMS service;
compressing the upper-layer protocol header by a predetermined header compression protocol common to the cells; and
configuring (815) a header attacher using the PDCP header information, for generating lower-layer protocol data by attaching a PDCP header to the compressed header and the user data,

wherein the PDCP header represents the header compression protocol.

**20.** The method of claim 19, wherein the header compression information includes a type of the header compression protocol, types of transmission protocols to which the header compression protocol is available, and a maximum context identifier (CID) value for header compression.

**21.** The method of claim 19, wherein the PDCP header information indicates if the header attacher is to be configured.

**22.** The method of claim 19, further comprising the steps of:

receiving a list of lower-layer entities;
configuring a buffer that is common to the cells in order to buffer the lower-layer protocol data;
configuring a plurality of pointers for pointing at positions of data to be transmitted to the lower-layer entities in the common buffer;
setting variables to an initial value, wherein the variables indicate respective sequence numbers (SNs) of data transmitted to the lower-layer entities;
configuring a switch for connecting the common buffer to the lower-layer entities; and
establishing connections between the switch and the lower-layer entities by referring to the list.

**23.** The method of claim 22, wherein the pointers are set to an initial value 0 and incremented by the amount of transmitted data, each time the data is transmitted to the lower-layer entities corresponding to the pointers.

**24.** The method of claim 22, wherein the variables are set to an initial value 1 and updated to the SNs of a last transmitted data, each time data is transmitted to the lower-layer entities corresponding to the variables.

**25.** The method of claim 22, further comprising the steps of:

performing one of segmenting and concatenating data received from the common buffer to a predetermined data size;
generating a PDU (Packet Data Unit) by attaching an RLC header having an SN to the one of segmented and concatenated data; and
transmitting the PDU to the switch

**26.** The method of claim 19, further comprising the steps of:

receiving a list of the lower-layer entities;
creating as many copies of a PDU (Packet Data Unit) as a number of cells;
distributing the copies;
buffering the distributed data using the list; and
connecting the buffers and the lower-layer entities.

**27.** The method of claim 26, further comprising the steps of:

performing one of segmenting and concatenating the lower-layer protocol data to a predetermined data size; and
generating the PDU by attaching an RLC header having a sequence number (SN) to the one of segmented and concatenated data.

**28.** A radio network controller (RNC) for providing an MBMS (Multimedia Broadcast/Multicast Service) service to UEs (User Equipments) within a plurality of cells (635-1 to 635-n), comprising:

a plurality of lower-layer entities corresponding to the cells; and
a PDCP (Packet Data Control Protocol) entity (615) that is common to the cells and specific to the MBMS service, for receiving MBMS data (650) and transmitting the MBMS data to the lower-layer entities,

wherein the PDCP entity comprises:

a header compressor (620) for receiving upper-layer protocol data including an upper-layer protocol header and user data for the MBMS service, and for compressing the upper-layer protocol header by a predetermined header compression protocol common to the plurality of cells; and
a PDCP header attacher (625) for generating lower-layer protocol data by attaching a PDCP header to the compressed header and the user data, the PDCP header representing the header compression protocol, and for transmitting the lower-layer protocol data to the lower-layer entities corresponding to the cells.

**29.** The RNC of claim 28, wherein the upper-layer protocol header is an RTP (Real-time Transfer Protocol)/UDP (User Datagram Protocol)/IP (Internet Protocol) header.

**30.** The RNC of claim 28, wherein the upper-layer protocol header is a UDP/IP header.

**31.** The RNC of claim 28, wherein the header compression protocol is ROHC (RObust Header Compression).

**32.** The RNC of claim 28, wherein the PDCP entity, upon receiving a request message requesting transmission of a control packet for the MBMS service to one of the cells, generates the control packet according to the request message, generates lower-layer protocol data by attaching a PDCP header to the control packet, and transmits the lower-layer protocol data to a lower-layer entity corresponding to the cell among the lower-layer entities.

**33.** The RNC of claim 28, further comprising:

an RLC (Radio Link Control) entity that is common to the cells, for connecting the PDCP entity to the lower-layer entities, the RLC entity having a common buffer for receiving the lower-layer protocol data, buffering the received lower-layer protocol data, and transmitting, upon receiving a request from one of the lower-layer entities corresponding to the cells, as much buffered data as requested to the lower-layer entity; and
a switch for switching the data received from the common buffer to the lower-layer entity.

**34.** The RNC of claim 33, wherein the RLC entity discards data transmitted to all the lower-layer entities among the buffered data from the common buffer.

**35.** The RNC of claim 33, wherein the RLC entity notifies the lower-layer entities of amounts of buffered data to be transmitted to the lower-layer entities.

**36.** The RNC of claim 33, wherein the RLC entity manages pointers corresponding to the lower-layer entities for the common buffer, determines, upon receiving a request indicating a data amount to receive from one of the lower-layer entities, an amount of data to be transmitted to the lower-layer entity based on the requested data amount, transmits as much data as the determined amount to the lower-layer entity, and decreases the value of a pointer corresponding to the lower-layer entity by the determined amount.

**37.** The RNC of claim 33, wherein the RLC entity further comprises:

a segmenter/concatenator for performing one of segmenting and concatenating the data output from the buffer to a predetermined data size; and
a header attacher for attaching an RLC header having a sequence number (SN) to the one of segmented and concatenated data and transmitting the RLC header-attached data to the lower-layer entity.

**38.** The RNC of claim 28, further comprising an RLC entity that is common to the cells, for connecting the PDCP entity to the lower-layer entities, the RLC entity having a copier/distributor for creating as many copies of the lower-layer protocol data as a number of the lower-layer entities, and distributing the copies to a plurality of buffers for the respective cells.

**39.** The RNC of claim 38, wherein the RLC entity notifies each of the lower-layer entities of an amount of data buffered in the buffer corresponding to the lower-layer entity.

**40.** The RNC of claim 38, wherein the RLC entity determines, upon receiving a request indicating a data amount to receive from one of the lower-layer entities, an amount of data to be transmitted to the lower-layer entity based on the requested data amount, and transmits to the lower-layer entity as much data as the determined amount from the buffer corresponding to the lower-layer entity.

**41.** The RNC of claim 38, wherein the RLC entity further comprises:

a segmenter/concatenator for performing one of segmenting and concatenating the data output from the buffer to a predetermined data size; and
a header attacher for attaching an RLC header having sequence number (SN) to the one of segmented and concatenated data and transmitting the RLC header-attached data to the lower-layer entity.

**EP 1 505 793 B1**

**Patentansprüche**

1. Verfahren zum Bereitstellen eines MBMS (Multimedia Broadcast/Multicast Service)-Dienstes für Benutzergeräte innerhalb einer Vielzahl von Zellen in einem Mobilkommunikationssystem, das die folgenden Schritte umfasst:

   Empfangen von Protokolldaten einer oberen Schicht, die einen Protokoll-Header einer oberen Schicht und Benutzerdaten für den MBMS-Dienst enthalten;
   Komprimieren des Protokoll-Headers der oberen Schicht mit einem vorgegebenen Header-Kompressionsprotokoll, das der Vielzahl von Zellen gemeinsam ist;
   Generieren von Protokolldaten einer unteren Schicht durch Anhängen eines PDCP (Packet Data Control Protocol)-Headers an den komprimierten Header und die Benutzerdaten, wobei der PDCP-Header das Header-Kompressionsprotokoll darstellt; und
   Senden der Protokolldaten der unteren Schicht zu Einheiten der unteren Schicht, die den Zellen entsprechen.

2. Verfahren nach Anspruch 1, wobei der Protokoll-Header der oberen Schicht ein RTP (Real-time Transfer Protocol) /UDP (User Datagram Protocol)/IP (Internet Protocol)-Header ist.

3. Verfahren nach Anspruch 1, wobei der Protokoll-Header der oberen Schicht ein UDP/IP-Header ist.

4. Verfahren nach Anspruch 1, das des Weiteren die folgenden Schritte umfasst:

   Empfangen einer Anforderungsnachricht, die Senden eines Steuer-Pakets für den MBMS-Dienst zu einer der Zellen anfordert;
   Generieren des Steuer-Pakets gemäß der Anforderungsnachricht;
   Generieren von Protokolldaten der unteren Schicht durch Anhängen eines PDCP-Headers an das Steuer-Paket; und
   Senden der Protokolldaten der unteren Schicht zu einer Einheit der unteren Schicht von den Einheiten der unteren Schicht, die der Zelle entspricht.

5. Verfahren nach Anspruch 1, wobei das Header-Kompressionsprotokoll ROHC (Robust Header Compression) ist.

6. Verfahren nach Anspruch 5, das des Weiteren die folgenden Schritte umfasst:

   Empfangen einer Anforderungsnachricht von einer der Zellen, wobei die Anforderungsnachricht einen Indikator enthält, der ein ROHC-IR (initializing & refresh)-Paket oder ein IR-DYN IR (initializing & refresh Dynamic)-Paket anzeigt;
   Generieren des ROHC-IR-Paketes oder des IR-DYN-Paketes gemäß dem Indikator;
   Generieren von Protokolldaten der unteren Schicht durch Anhängen eines PDCP-Headers an das ROHC-IR-Paket oder das RR-DYN-Paket; und
   Senden der Protokolldaten der unteren Schicht zu einer Einheit der unteren Schicht von den Einheiten der unteren Schicht, die der Zelle entspricht.

7. Verfahren nach Anspruch 1, wobei das Verfahren durch eine PDCP-Einheit durchgeführt wird, die den Zellen gemeinsam ist und spezifisch für den MBMS-Dienst ist.

8. Verfahren nach Anspruch 1, das des Weiteren die folgenden Schritte umfasst:

   Empfangen der Protokolldaten der unteren Schicht;
   Puffern der empfangenen Protokolldaten der unteren Schicht in einem Puffer, der den Zellen gemeinsam ist; und
   beim Empfangen einer Anforderung von einer der Einheiten der unteren Schicht, die den Zellen entsprechen, Senden der gepufferten Daten zu der Einheit der unteren Schicht.

9. Verfahren nach Anspruch 8, das des Weiteren den Schritt des Verwerfens von Daten von den gepufferten Daten aus dem gemeinsamen Puffer umfasst, die zu allen Einheiten der unteren Schicht gesendet werden.

10. Verfahren nach Anspruch 8, das des Weiteren den Schritt des Benachrichtigens der Einheiten der unteren Schicht über Mengen gepufferter Daten einschließt, die zu den Einheiten der unteren Schicht zu senden sind.

**11.** Verfahren nach Anspruch 8, das des Weiteren die folgenden Schritte umfasst:

Verwalten von Zeigern, die den Einheiten der unteren Schicht entsprechen, für den gemeinsamen Puffer;
beim Empfangen einer Anforderung, die eine Datenmenge zum Empfangen anzeigt, von einer der Einheiten der unteren Schicht, Bestimmen einer Menge von zu der Einheit der unteren Schicht zu sendenden Daten auf Basis der angeforderten Datenmenge;
Senden von Daten in der bestimmten Menge zu der Einheit der unteren Schicht; und
Verringern des Wertes eines Zeigers, der der Einheit der unteren Schicht entspricht, um die bestimmte Menge.

**12.** Verfahren nach Anspruch 11, wobei der Schritt des Sendens der gepufferten Daten die folgenden Schritte umfasst:

Segmentieren der von dem Puffer ausgegebenen Daten auf eine vorgegebene Datengröße;
Anhängen eines RLC (Radio Link Control)-Headers mit einer Sequenznummer (SN) an die segmentierten Daten; und
Senden der Daten, an die der RLC-Header angehängt ist, zu der Einheit der unteren Schicht.

**13.** Verfahren nach Anspruch 11, wobei der Schritt des Sendens der gepufferten Daten die folgenden Schritte umfasst:

Verknüpfen der von dem Puffer ausgegebenen Daten zu einer vorgegebenen Datengröße;
Anhängen eines RLC (Radio Link Control)-Headers mit einer Sequenznummer (SN) an die verknüpften Daten; und
Senden der Daten, an die der RLC-Header angehängt ist, zu der Einheit der unteren Schicht.

**14.** Verfahren nach Anspruch 1, das des Weiteren die folgenden Schritte umfasst:

Empfangen der Protokolldaten der unteren Schicht;
Puffern der empfangenen Protokolldaten der unteren Schicht in Puffern, die den Zellen entsprechen; und
Senden der gepufferten Daten eines Puffers, der der Einheit der unteren Schicht entspricht, zu einer der Einheiten der unteren Schicht auf Anforderung von der Einheit der unteren Schicht.

**15.** Verfahren nach Anspruch 14, das des Weiteren den Schritt des Benachrichtigens jeder der Einheiten der unteren Schicht über eine Menge an Daten umfasst, die in dem Puffer gepuffert sind, der der Einheit der unteren Schicht entspricht.

**16.** Verfahren nach Anspruch 14, wobei der Schritt des Sendens der gepufferten Daten die folgenden Schritte umfasst:

Empfangen einer Anforderung, die eine Datenmenge zum Empfangen von einer der Einheiten der unteren Schicht anzeigt,
Bestimmen der zu der Einheit der unteren Schicht zu sendenden Menge an Daten auf Basis der angeforderten Datenmenge; und
Senden von Daten in der bestimmten Menge aus dem Puffer, der der Einheit der unteren Schicht entspricht, zu der Einheit der unteren Schicht.

**17.** Verfahren nach Anspruch 14; wobei der Schritt des Sendens der gepufferten Daten die folgenden Schritte umfasst:

Segmentieren der von dem Puffer ausgegebenen Daten auf eine vorgegebene Datengröße;
Generieren einer PDU (Packet Data Unit) durch Anhängen eines RLC-Headers mit einer Sequenznummer (SN) an die segmentierten Daten; und
Senden der PDU zu der Einheit der unteren Schicht.

**18.** Verfahren nach Anspruch 14, wobei der Schritt des Sendens der gepufferten Daten die folgenden Schritte umfasst:

Verknüpfen der von dem Puffer ausgegebenen Daten zu einer vorgegebenen Datengröße;
Generieren einer PDU (Packet Data Unit) durch Anhängen eines RLC-Headers mit einer Sequenznummer (SN) an die verknüpften Daten; und
Senden der PDU zu der Einheit der unteren Schicht.

**19.** Verfahren zum Konfigurieren einer gemeinsamen Vorrichtung für eine Vielzahl von Zellen zum Bereitstellen eines MBMS (Multimedia Broadcast/Multicast Service)-Dienstes für Benutzergeräte innerhalb der Vielzahl von Zellen in einem Mobilkommunikationssystem, das die folgenden Schritte umfasst:

Empfangen (805) einer Konfigurationsanforderungs-Nachricht mit PDCP (Packet Data Control Protocol)-Header-Informationen und Header-Kompressionsinformationen;
Konfigurieren (810) einer Header-Kompressionseinrichtung unter Verwendung der Header-Kompressionsinformationen zum Empfangen von Protokolldaten einer oberen Schicht, die einen Protokoll-Header der oberen Schicht und Benutzerdaten für einen MBMS-Dienst enthalten;
Komprimieren des Protokoll-Headers der oberen Schicht mit einem vorgegebenen Header-Kompressionsprotokoll, das den Zellen gemeinsam ist; und
Konfigurieren (815) einer Header-Anhängeinrichtung unter Verwendung der PDCP-Header-Informationen zum Erzeugen von Protokolldaten einer unteren Schicht durch Anhängen eines PDCP-Headers an den komprimierten Header und die Benutzerdaten,

wobei der PDCP-Header das Header-Kompressionsprotokoll darstellt.

20. Verfahren nach Anspruch 19, wobei die Header-Kompressionsinformationen ein Typ des Header-Kompressionsprotokolls, Typen von Sendeprotokollen, für die das Header-Kompressionsprotokoll verfügbar ist, sowie einen maximalen CID (context identifier)-Wert für Header-Kompression enthalten.

21. Verfahren nach Anspruch 19, wobei die PDCP-Header-Informationen anzeigen, ob die Header-Anhängeeinrichtung zu konfigurieren ist.

22. Verfahren nach Anspruch 19, das des Weiteren die folgenden Schritte umfasst:

Empfangen einer Liste von Einheiten der unteren Schicht;
Konfigurieren eines Puffers, der den Zellen gemeinsam ist, zum Puffern der Protokolldaten der unteren Schicht;
Konfigurieren einer Vielzahl von Zeigern, die auf Positionen von Daten, die zu den Einheiten der unteren Schicht zu senden sind, in dem gemeinsamen Puffer zeigen;
Setzen von Variablen auf einen Ausgangswert, wobei die Variablen jeweilige Sequenznummern (SNs) von Daten anzeigen, die zu den Einheiten der unteren Schicht zu senden sind;
Konfigurieren eines Switch zum Verbinden des gemeinsamen Puffers mit den Einheiten der unteren Schicht; und
Herstellen von Verbindungen zwischen dem Switch und den Einheiten der unteren Schicht durch Bezugnahme auf die Liste.

23. Verfahren nach Anspruch 22, wobei die Zeiger auf einen Ausgangswert 0 gesetzt werden und immer dann, wenn die Daten zu den Einheiten der unteren Schicht gesendet werden, die den Zeigern entsprechen, um die Menge gesendeter Daten inkrementiert werden.

24. Verfahren nach Anspruch 22, wobei die Variablen auf einen Ausgangswert 1 gesetzt werden und immer dann, wenn Daten zu den Einheiten der unteren Schicht gesendet werden, die den Variablen entsprechen, auf die Sequenznummern zuletzt gesendeter Daten aktualisiert werden.

25. Verfahren nach Anspruch 22, das des Weiteren die folgenden Schritte umfasst:

Durchführen von Segmentieren oder Verknüpfen von dem gemeinsamen Puffer empfangener Daten zu einer vorgegebenen Datengröße;
Generieren einer PDU (Packet Data Unit) durch Anhängen eines RLC-Headers mit einer Sequenznummer an die segmentierten oder verknüpften Daten; und
Senden der PDU zu dem Switch.

26. Verfahren nach Anspruch 19, das des Weiteren die folgenden Schritte umfasst:

Empfangen einer Liste der Einheiten der unteren Schicht;
Erzeugen von Kopien einer PDU (Packet Data Unit) in einer Anzahl der Zellen;
Verteilen der Kopien;
Puffern der verteilten Daten unter Verwendung der Liste; und
Verbinden der Puffer und der Einheiten der unteren Schicht.

**27.** Verfahren nach Anspruch 26, das des Weiteren die folgenden Schritte umfasst:

Durchführen von Segmentieren oder Verknüpfen der Protokolldaten der unteren Schicht zu einer vorgegebenen Datengröße; und
Erzeugen der PDU durch Anhängen eines RLC-Headers mit einer Sequenznummer (SN) an die segmentierten oder verknüpften Daten.

**28.** Funknetzsteuerung (Radio Network Controller - RNC) zum Bereitstellen eines MBMS (Multimedia Broadcast/Multicast Service)-Dienstes für Benutzergeräte innerhalb einer Vielzahl von Zellen (635-1 bis 635-n), die umfasst:

eine Vielzahl von Einheiten einer unteren Schicht, die den Zellen entsprechen;
eine PDCP (Packet Data Control Protocol)-Einheit (615), die den Zellen gemeinsam ist und spezifisch für den MBMS-Dienst ist, zum Empfangen von MBMS-Daten (650) und Senden der MBMS-Daten zu den Einheiten der unteren Schicht,

wobei die PDCP-Einheit umfasst:

eine Header-Kompressionseinrichtung (620) zum Empfangen von Protokolldaten einer oberen Schicht, die einen Protokoll-Header der oberen Schicht und Benutzerdaten für den MBMS-Dienst enthalten, und zum Komprimieren des Protokoll-Headers der oberen Schicht mit einem vorgegebenen Header-Kompressionsprotokoll, das der Vielzahl von Zellen gemeinsam ist; und
eine PDCP-Header-Anhängeeinrichtung (625) zum Generieren von Protokolldaten der unteren Schicht durch Anhängen eines PDCP-Headers an den komprimierten Header und die Benutzerdaten, wobei der PDCP-Header das Header-Kompressionsprotokoll darstellt, und zum Senden der Protokolldaten der unteren Schicht zu den Einheiten der unteren Schicht, die den Zellen entsprechen.

**29.** RNC nach Anspruch 28, wobei der Protokoll-Header der oberen Schicht ein RTP (Real-time Transfer Protocol)/UDP (User Datagram Prtocol)/IP (Internet Protocol)-Header ist.

**30.** RNC nach Anspruch 28, wobei der Protokoll-Header der oberen Schicht ein UDP/IP-Header ist.

**31.** RNC nach Anspruch 28, wobei das Header-Kompressionsprotokoll ROHC (RObust Header Compression) ist.

**32.** RNC nach Anspruch 28, wobei die PDCP-Einheit beim Empfangen einer Anforderungsnachricht, die Senden eines Steuer-Paketes für den MBMS-Dienst zu einer der Zellen anfordert, das Steuer-Paket gemäß der Anforderungsnachricht generiert, Protokoll-Daten der unteren Schicht durch Anhängen eines PDCP-Headers an das Steuer-Paket generiert und die Protokolldaten der unteren Schicht zu einer Einheit der unteren Schicht von den Einheiten der unteren Schicht sendet, die der Zelle entspricht.

**33.** RNC nach Anspruch 28, die des Weiteren umfasst:

eine RLC (Radio Link Control)-Einheit, die den Zellen gemeinsam ist, zum Verbinden der PDCP-Einheit mit den Einheiten der unteren Schicht, wobei die RLC-Einheit einen gemeinsamen Puffer zum Empfangen der Protokolldaten der unteren Schicht, Puffern der empfangenen Protokolldaten der unteren Schicht und zum Senden gepufferter Daten in einer angeforderten Menge zu der Einheit der unteren Schicht beim Empfangen einer Anforderung von einer der Einheiten der unteren Schicht, die den Zellen entsprechen, aufweist; und
einen Switch zum Verschieben der von dem gemeinsamen Puffer empfangenen Daten zu der Einheit der unteren Schicht.

**34.** RNC nach Anspruch 33, wobei die RNC-Einheit von den gepufferten Daten aus dem gemeinsamen Puffer Daten verwirft, die zu allen der Einheiten der unteren Schicht gesendet werden.

**35.** RNC nach Anspruch 33, wobei die RLC-Einheit die Einheiten der unteren Schicht über Mengen gepufferter Daten benachrichtigt, die zu den Einheiten der unteren Schicht zu senden sind.

**36.** RNC nach Anspruch 33, wobei die RLC-Einheit Zeiger, die den Einheiten der unteren Schicht entsprechen, für den gemeinsamen Puffer verwaltet, beim Empfangen einer Anforderung, die eine zu empfangende Datenmenge anzeigt, von einer der Einheiten der unteren Schicht eine Menge an Daten, die zu der Einheit der unteren Schicht zu senden ist, auf Basis der angeforderten Datenmenge bestimmt, Daten in der bestimmten Menge zu der Einheit der unteren Schicht sendet und den Wert eines Zeigers, der der Einheit der unteren Schicht entspricht, um die bestimmte Menge verringert.

**37.** RNC nach Anspruch 33, wobei die RLC-Einheit des Weiteren umfasst:

eine Segmentier-/Verknüpfungseinrichtung zum Durchführen von Segmentieren oder Verknüpfen der von dem Puffer ausgegebenen Daten zu einer vorgegebenen Datengröße; und
eine Header-Anhängeeinrichtung zum Anhängen eines RLC-Headers mit einer Sequenznummer (SN) an die segmentierten oder verknüpften Daten und zum Senden der Daten, an die der RLC-Header angehängt ist, zu der Einheit der unteren Schicht.

**38.** RNC nach Anspruch 28, die des Weiteren eine RLC-Einheit, die den Zellen gemeinsam ist, zum Verbinden der PDCP-Einheit mit den Einheiten der unteren Schicht umfasst, wobei die RLC-Einheit eine Kopier-/Verteileinrichtung zum Erzeugen von Kopien der Protokolldaten der unteren Schicht in einer Anzahl der Einheiten der unteren Schicht und zum Verteilen der Kopien auf eine Vielzahl von Puffern für die jeweiligen Zellen umfasst.

**39.** RNC nach Anspruch 38, wobei die RLC-Einheit jede der Einheiten der unteren Schicht über eine Menge an Daten benachrichtigt, die in dem Puffer gepuffert sind, der der Einheit der unteren Schicht entspricht.

**40.** RNC nach Anspruch 38, wobei die RLC-Einheit beim Empfangen einer Anforderung, die eine zu empfangende Datenmenge anzeigt, von einer der Einheiten der unteren Schicht eine Menge an Daten, die zu der Einheit der unteren Schicht zu senden ist, auf Basis der angeforderten Datenmenge bestimmt und Daten in der bestimmten Menge aus dem Puffer, der der Einheit der unteren Schicht entspricht, zu der Einheit der unteren Schicht sendet.

**41.** RNC nach Anspruch 38, wobei die RLC-Einheit des Weiteren umfasst:

eine Segmentier-/Verknüpfungseinrichtung zum Durchführen von Segmentieren oder Verknüpfen der von dem Puffer ausgegebenen Daten zu einer vorgegebene Datengröße; und
eine Header-Anhängeeinrichtung zum Anhängen eines RLC-Headers mit einer Sequenznummer (SN) an die segmentierten oder verknüpften Daten und zum Senden der Daten, an die der RLC-Header angehängt ist, zu der Einheit der unteren Schicht.

## Revendications

**1.** Procédé pour fournir un Service de Diffusion / Multidiffusion Multimédia, ou MBMS (Multimédia Broadcast/ Multicast Service), à des Equipements d'Utilisateurs, ou UE (User Equipments), dans une multiplicité de cellules dans un système de communication mobile, comprenant les étapes suivantes :

recevoir des données de protocole de couche supérieure incluant un en-tête de protocole de couche supérieure et des données d'utilisateur pour le service MBMS ;
compresser l'en-tête de protocole de couche supérieure par un protocole de compression d'en-tête prédéterminé qui est commun à la multiplicité de cellules ;
générer des données de protocole de couche inférieure en adjoignant un en-tête de Protocole de Commande de Données de Paquet, ou PDCP (Packet Data Control Protocol), à l'en-tête compressé et aux données d'utilisateur, l'en-tête PDCP représentant le protocole de compression d'en-tête ; et
émettre les données de protocole de couche inférieure vers des entités de couche inférieure correspondant aux cellules.

**2.** Procédé selon la revendication 1, dans lequel l'en-tête de protocole de couche supérieure est un en-tête RTP (Real-time Transfer Protocol - Protocole de Transfert en Temps Réel) / UDP (User Datagram Protocol - Protocole de Datagramme Utilisateur) / IP (Internet Protocol - Protocole Internet).

**3.** Procédé selon la revendication 1, dans lequel l'en-tête de protocole de couche supérieure est un en-tête UDP/IP.

**4.** Procédé selon la revendication 1, comprenant en outre les étapes suivantes :

recevoir un message de demande qui demande l'émission d'un paquet de commande pour le service MBMS vers l'une des cellules ;

générer le paquet de commande conformément au message de demande ;

générer des données de protocole de couche inférieure en adjoignant un en-tête PDCP au paquet de commande ; et

émettre les données de protocole de couche inférieure vers une entité de couche inférieure correspondant à la cellule, parmi les entités de couche inférieure.

5. Procédé selon la revendication 1, dans lequel le protocole de compression d'en-tête est le protocole ROHC (RObust Header Compression).

6. Procédé selon la revendication 5, comprenant en outre les étapes suivantes:

recevoir un message de demande provenant de l'une des cellules, le message de demande incluant un indicateur qui indique un d'un paquet ROHC d'initialisation & rafraîchissement (IR) et d'un paquet d'initialisation & rafraîchissement Dynamique (IR-DYN) ;

générer l'un du paquet ROHC IR et du paquet IR-DYN conformément à l'indicateur ;

générer des données de protocole de couche inférieure en adjoignant un en-tête PDCP à l'un du paquet ROHC IR et du paquet IR-DYN ; et

émettre les données de protocole de couche inférieure vers une entité de couche inférieure correspondant à la cellule, parmi les entités de couche inférieure.

7. Procédé selon la revendication 1, dans lequel le procédé est exécuté par une entité PDCP commune aux cellules et spécifique au service MBMS.

8. Procédé selon la revendication 1, comprenant en outre les étapes suivantes:

recevoir les données de protocole de couche inférieure ;

enregistrer en tampon les données de protocole de couche inférieure reçues, dans un tampon commun aux cellules ; et

à la réception d'une demande provenant de l'une des entités de couche inférieure correspondant aux cellules, émettre vers l'entité de couche inférieure les données enregistrées en tampon.

9. Procédé selon la revendication 8, comprenant en outre l'étape consistant à rejeter du tampon commun des données émises vers toutes les entités de couche inférieure, parmi les données enregistrées en tampon.

10. Procédé selon la revendication 8, comprenant en outre l'étape consistant à notifier aux entités de couche inférieure des quantités de données enregistrées en tampon à émettre vers les entités de couche inférieure.

11. Procédé selon la revendication 8, comprenant en outre les étapes suivantes :

gérer des pointeurs correspondant aux entités de couche inférieure pour le tampon commun ;

à la réception d'une demande provenant de l'une des entités de couche inférieure, indiquant une quantité de données à recevoir, déterminer une quantité de données à émettre vers l'entité de couche inférieure, sur la base de la quantité de données demandée ;

émettre vers l'entité de couche inférieure une quantité de données égale à la quantité déterminée ; et

diminuer de la quantité déterminée la valeur d'un pointeur correspondant à l'entité de couche inférieure.

12. Procédé selon la revendication 11, dans lequel l'étape d'émission des données enregistrées en tampon comprend les étapes suivantes:

segmenter à une taille de données prédéterminée les données émises par le tampon ;

adjoindre aux données segmentées un en-tête de Commande de Liaison Radio, ou RLC (Radio Link Control), ayant un numéro de séquence (SN pour "Sequence Number"); et

émettre vers l'entité de couche inférieure les données auxquelles l'en-tête RLC est adjoint.

13. Procédé selon la revendication 11, dans lequel l'étape d'émission des données enregistrées en tampon comprend les étapes suivantes :

concaténer selon une taille de données prédéterminée les données émises par le tampon ;
adjoindre aux données concaténées un en-tête RLC (Radio Link Control) ayant un numéro de séquence (SN) ; et
émettre vers l'entité de couche inférieure les données auxquelles l'en-tête RLC est adjoint.

**14.** Procédé selon la revendication 1, comprenant en outre les étapes suivantes :

recevoir les données de protocole de couche inférieure ;
enregistrer dans des tampons correspondant aux cellules les données de protocole de couche inférieure reçues ; et
émettre vers l'une des entités de couche inférieure les données enregistrées d'un tampon correspondant à l'entité de couche inférieure, sous l'effet d'une demande provenant de l'entité de couche inférieure.

**15.** Procédé selon la revendication 14, comprenant en outre l'étape consistant à notifier à chacune des entités de couche inférieure une quantité de données enregistrées dans le tampon correspondant à l'entité de couche inférieure.

**16.** Procédé selon la revendication 14, dans lequel l'étape d'émission des données enregistrées en tampon comprend les étapes suivantes :

recevoir de l'une des entités de couche inférieure une demande indiquant une quantité de données à recevoir, déterminer la quantité de données à émettre vers l'entité de couche inférieure sur la base de la quantité de données demandée ; et
émettre vers l'entité de couche inférieure, à partir du tampon correspondant à l'entité de couche inférieure, une quantité de données égale à la quantité déterminée.

**17.** Procédé selon la revendication 14, dans lequel l'étape d'émission des données enregistrées en tampon comprend les étapes suivantes :

segmenter à une taille de données prédéterminée les données émises par le tampon ;
générer une Unité de Données de Paquet, ou PDU (Packet Data Unit), en adjoignant aux données segmentées un en-tête RLC ayant un numéro de séquence (SN) ; et
émettre la PDU vers l'entité de couche inférieure.

**18.** Procédé selon la revendication 14, dans lequel l'étape d'émission des données enregistrées en tampon comprend les étapes suivantes :

concaténer selon une taille de données prédéterminée les données émises par le tampon ;
générer une Unité de Données de Paquet, ou PDU (Packet Data Unit), en adjoignant aux données concaténées un en-tête RLC ayant un numéro de séquence (SN) ; et
émettre la PDU vers l'entité de couche inférieure.

**19.** Procédé pour configurer un dispositif commun pour une multiplicité de cellules, pour fournir un Service de Diffusion / Multidiffusion Multimédia, ou MBMS (Multimedia Broadcast/Multicast Service), à des Equipements d'Utilisateurs, ou UE (User Equipments), dans la multiplicité de cellules dans un système de communication mobile, comprenant les étapes suivantes :

recevoir (805) un message de demande de configuration ayant une information d'en-tête PDCP (Packet Data Control Protocol) et une information de compression d'en-tête ;
configurer (810) un compresseur d'en-tête en utilisant l'information de compression d'en-tête, pour recevoir des données de protocole de couche supérieure incluant un en-tête de protocole de couche supérieure et des données d'utilisateur pour le service MBMS ;
compresser l'en-tête de protocole de couche supérieure par un protocole de compression d'en-tête prédéterminé, commun aux cellules ; et
configurer (815) un dispositif d'adjonction d'en-tête en utilisant l'information d'en-tête PDCP, pour générer des données de protocole de couche inférieure en adjoignant un en-tête PDCP à l'en-tête compressé et aux données d'utilisateur ;

dans lequel l'en-tête PDCP représente le protocole de compression d'en-tête.

**20.** Procédé selon la revendication 19, dans lequel l'information de compression d'en-tête comprend un type du protocole de compression d'en-tête, des types de protocoles de transmission pour lesquels le protocole de compression d'en-tête est disponible, et une valeur maximale d'Identificateur de Contexte (CID pour "Context Identifier") pour la compression d'en-tête.

**21.** Procédé selon la revendication 19, dans lequel l'information d'en-tête PDCP indique si le dispositif d'adjonction d'en-tête doit être configuré.

**22.** Procédé selon la revendication 19, comprenant en outre les étapes suivantes :

recevoir une liste d'entités de couche inférieure :

configurer un tampon qui est commun aux cellules afin d'enregistrer en tampon les données de protocole de couche inférieure ;
configurer une multiplicité de pointeurs pour pointer vers des positions de données à émettre vers les entités de couche inférieure, dans le tampon commun ;
fixer des variables à une valeur initiale, les variables indiquant des numéros de séquence (SN) respectifs de données émises vers les entités de couche inférieure ;
configurer un commutateur pour connecter le tampon commun aux entités de couche inférieure ; et
établir des connexions entre le commutateur et les entités de couche inférieure en se référant à la liste.

**23.** Procédé selon la revendication 22, dans lequel les pointeurs sont fixés à une valeur initiale 0 et sont incrémentés de la quantité de données émises, chaque fois que les données sont émises vers les entités de couche inférieure correspondant aux pointeurs.

**24.** Procédé selon la revendication 22, dans lequel les variables sont fixées à une valeur initiale 1 et sont actualisées aux SN d'une donnée émise en dernier, chaque fois que des données sont émises vers les entités de couche inférieure correspondant aux variables.

**25.** Procédé selon la revendication 22, comprenant en outre les étapes suivantes :

effectuer une opération parmi la segmentation et la concaténation de données reçues du tampon commun, conformément à une taille de données prédéterminée ;
générer une Unité de Données de Paquet, ou PDU (Packet Data Unit), en adjoignant un en-tête RLC ayant un SN aux données segmentées ou aux données concaténées ; et
émettre la PDU vers le commutateur.

**26.** Procédé selon la revendication 19, comprenant en outre les étapes suivantes :

recevoir une liste des entités de couche inférieure ;
créer des copies d'une Unité de Données de Paquet, ou PDU (Packet Data Unit), en un nombre égal au nombre de cellules ;
distribuer les copies ;
enregistrer en tampon les données distribuées, en utilisant la liste ; et
connecter les tampons et les entités de couche inférieure.

**27.** Procédé selon la revendication 26, comprenant en outre les étapes suivantes:

effectuer une opération parmi la segmentation et la concaténation des données de protocole de couche inférieure, conformément à une taille de données prédéterminée ; et
générer la PDU en adjoignant un en-tête RLC ayant un numéro de séquence (SN) aux données segmentées ou aux données concaténées.

**28.** Contrôleur de Réseau Radio (RNC pour "Radio Network Controller") pour fournir un Service de Diffusion / Multidiffusion Multimédia, ou MBMS (Multimedia Broadcast/ Multicast Service), à des Equipements d'Utilisateurs, ou UE (User Equipments), dans une multiplicité de cellules (635-1 à 635-n), comprenant :

une multiplicité d'entités de couche inférieure correspondant aux cellules ; et

une entité de PDCP (Packet Data Control Protocol) (615) qui est commune aux cellules et spécifique au service MBMS, pour recevoir des données MBMS (650) et émettre les données MBMS vers les entités de couche inférieure,

dans lequel l'entité de PDCP comprend :

un compresseur d'en-tête (620) pour recevoir des données de protocole de couche supérieure incluant un en-tête de protocole de couche supérieure et des données d'utilisateur pour le service MBMS, et pour compresser l'en-tête de protocole de couche supérieure conformément à un protocole de compression d'en-tête prédéterminé, commun à la multiplicité de cellules ; et
un dispositif d'adjonction d'en-tête PDCP (625) pour générer des données de protocole de couche inférieure en adjoignant un en-tête PDCP à l'en-tête compressé et aux données d'utilisateur, l'en-tête PDCP représentant le protocole de compression d'en-tête, et pour émettre les données de protocole de couche inférieure vers les entités de couche inférieure correspondant aux cellules.

29. RNC selon la revendication 28, dans lequel l'en-tête de protocole de couche supérieure est un en-tête RTP (Real-time Transfer Protocol) / UDP (User Datagram Protocol) / IP (Internet Protocol).

30. RNC selon la revendication 28, dans lequel l'en-tête de protocole de couche supérieure est un en-tête UDP/IP.

31. RNC selon la revendication 28, dans lequel le protocole de compression d'en-tête est le protocole ROHC (RObust Header Compression).

32. RNC selon la revendication 28, dans lequel à la réception d'un message de demande demandant l'émission d'un paquet de commande pour le service MBMS vers l'une des cellules, l'entité de PDCP génère le paquet de commande conformément au message de demande, génère des données de protocole de couche inférieure en adjoignant un en-tête PDCP au paquet de commande, et émet les données de protocole de couche inférieure vers une entité de couche inférieure correspondant à la cellule, parmi les entités de couche inférieure.

33. RNC selon la revendication 28, comprenant en outre :

une entité de Commande de Liaison Radio, RLC (Radio Link Control) qui est commune aux cellules, pour connecter l'entité de PDCP aux entités de couche inférieure, l'entité de RLC ayant un tampon commun pour recevoir les données de protocole de couche inférieure, enregistrer en tampon les données de protocole de couche inférieure reçues, et émettre vers l'entité de couche inférieure, à la réception d'une demande provenant de l'une des entités de couche inférieure correspondant aux cellules, une quantité de données enregistrées en tampon égale à ce qui est demandé ; et
un commutateur pour commuter vers l'entité de couche inférieure les données reçues à partir du tampon commun.

34. RNC selon la revendication 33, dans lequel l'entité de RLC rejette du tampon commun des données émises vers toutes les entités de couche inférieure, parmi les données enregistrées en tampon.

35. RNC selon la revendication 33, dans lequel l'entité de RLC notifie aux entités de couche inférieure des quantités de données enregistrées en tampon à émettre vers les entités de couche inférieure.

36. RNC selon la revendication 33, dans lequel l'entité de RLC gère des pointeurs correspondant aux entités de couche inférieure pour le tampon commun, détermine, à la réception d'une demande provenant de l'une des entités de couche inférieure, indiquant une quantité de données à recevoir, une quantité de données à émettre vers l'entité de couche inférieure, sur la base de la quantité de données demandée, émet vers l'entité de couche inférieure une quantité de données égale à la quantité déterminée, et diminue de la quantité déterminée la valeur d'un pointeur correspondant à l'entité de couche inférieure.

37. RNC selon la revendication 33, dans lequel l'entité de RLC comprend en outre :

un dispositif de segmentation / concaténation pour effectuer une opération parmi la segmentation et la concaténation conformément à une taille de données prédéterminée des données émises par le tampon ; et
un dispositif d'adjonction d'en-tête pour adjoindre aux données segmentées ou aux données concaténées un en-tête RLC ayant un numéro de séquence (SN), et émettre vers l'entité de couche inférieure les données auxquelles l'en-tête RLC est adjoint.

38. RNC selon la revendication 28, comprenant en outre une entité de RLC qui est commune aux cellules, pour connecter l'entité de PDCP aux entités de couche inférieure, l'entité de RLC ayant un copieur / distributeur pour créer un nombre de copies des données de protocole de couche inférieure égal au nombre d'entités de couche inférieure, et pour distribuer les copies à une multiplicité de tampons pour les cellules respectives.

39. RNC selon la revendication 38, dans lequel l'entité de RLC notifie à chacune des entités de couche inférieure une quantité de données enregistrées dans le tampon correspondant à l'entité de couche inférieure.

40. RNC selon la revendication 38, dans lequel l'entité de RLC détermine, à la réception d'une demande provenant de l'une des entités de couche inférieure, indiquant une quantité de données à recevoir, une quantité de données à émettre vers l'entité de couche inférieure sur la base de la quantité de données demandée, et émet vers l'entité de couche inférieure, à partir du tampon correspondant à l'entité de couche inférieure, une quantité de données égale à la quantité déterminée.

41. RNC selon la revendication 38, dans lequel l'entité de RLC comprend en outre :

un dispositif de segmentation / concaténation pour effectuer une opération parmi la segmentation et la concaténation conformément à une taille de données prédéterminée des données émises par le tampon ; et
un dispositif d'adjonction d'en-tête pour adjoindre aux données segmentées ou aux données concaténées un en-tête RLC ayant un numéro de séquence (SN), et émettre vers l'entité de couche inférieure les données auxquelles l'en-tête RLC est adjoint.

FIG.1

FIG.2

EP 1 505 793 B1

FIG.3

| UE | RNC | SGSN |

ANNOUNCEMENT ~400

JOINING ~410

SESSION START ⟋415

MBMS PAGING ⟋420

MBMS PAGING RESPONSE ~430

MBMS RB CONFIGURATION ~433

⟋435
[MCCH] MBMS RB INFO

MBMS DATA TRANSFER ~440

FIG.4

500
Inputting MBMS data via Iu I/F

510

PDCP

Compressor
protocol 1

515

PDCP

Compressor
protocol 1

• • • •

520

PDCP

Compressor
protocol 1

525

530

535

Outputting Compressed Data

# FIG.5A

500
Inputting MBMS data via Iu I/F

540

PDCP

Compressor
protocol 1

Outputting Compressed Data

535

525

530

# FIG.5B

MBMS data ___ 650

605

MBMS RB

610

615

PDCP entity

| COMPRESSOR | —620 |

| PDCP HEADER ATTACHER | —625 |

655

RRC/MBMS
Context

• • • •

635-1   635-2   635-n

| cell 1 | cell 2 | cell n |

FIG.6

via Iu interface

700

PDCP entity

PDCP-DATA-REQ
[RTP/UDP/IP header + user data] ~705

| COMPRESSOR | ~710 |

Compressed header + user data ~715

| PDCP HEADER ATTACHER | ~720 |

RLC-DATA-REQ [PDCP header +
Compressed header + user data] ~725

to RLC

# FIG.7

CPDCP-CONFIG-REQ RECEPTION
(PDCP HEADER, HEADER
COMPRESSION INFORMATION) ⎯805

HEADER COMPRESSOR CONFIGURATION
(HEADER COMPRESSION INFORMATION) ⎯810

PDCP HEADER CONFIGURATION
(PDCP HEADER) ⎯815

# FIG.8

PDCP-DATA-REQ RECEPTION ⎯905

HEADER COMPRESSOR:
HEADER COMPRESSION ⎯910

PDCP HEADER ATTACHER:
PDCP HEADER ATTACHMENT
AND TRANSMISSION TO RLC ⎯915

# FIG.9

CPDCP-CONFIG-REQ
[IR/IR-DYN indicator] — 1010       ⌐700

┌─────────────────────────────────────────────────┐
PDCP entity

IR/IR-DYN indicator — 1015

┌──────────────────────────────────┐
│           COMPRESSOR             │— 710
└──────────────────────────────────┘

IR packet or IR-DYN packet, — 1020
IR/IR-DYN indicator

┌──────────────────────────────────┐
│      PDCP HEADER ATTACHER        │— 720
└──────────────────────────────────┘

RLC-DATA-REQ [PDCP heafer + — 1030
IR packet or IR-DYN packet,
IR/IR-DYN indicator]
└─────────────────────────────────────────────────┘

to RLC

# FIG.10

MBMS DATA ⟋1105

```
                                          ⟋1100
┌ ─ ─ ─ ─ ─ ─ ─ ─ ─ ─ ─ ─ ─ ─ ─ ─ ─ ─ ─ ─ ─ ─ ┐
│  RNC                              ⟋1110      │
│                    ┌──────────────┐          │
│                    │ UPPER LAYER  │          │
│                    └──────────────┘          │
│                              ⟋1120           │
│                    ┌──────────────┐          │
│         ┌──────────│ COMMON RLC   │────────┐ │  ....
│         │          └──────────────┘        │ │
│  ⟋1125-1│          ⟋1125-2        │ ⟋1125-3 │ │
│  ┌──────────┐    ┌──────────┐    ┌──────────┐│
│  │   MAC    │    │   MAC    │    │   MAC    ││
│  └──────────┘    └──────────┘    └──────────┘│
└ ─ ─ ─│─ ─ ─ ─ ─ ─ ─ ─│─ ─ ─ ─ ─ ─ ─ ─│─ ─ ─ ┘
       │ ⟋1130-1       │ ⟋1130-2       │ ⟋1130-3
  ┌──────────┐    ┌──────────┐    ┌──────────┐
  │   PHY    │    │   PHY    │    │   PHY    │
  └──────────┘    └──────────┘    └──────────┘
   For cell 1      For cell 2      For cell 3
```

# FIG.11

UPPER LAYER ⟋1205

⟋1210

COMMON RLC ENTITY

1215~

Pointer_2, PDU SN_2

Pointer_1, PDU SN_1

Pointer_3, PDU SN_3

SEGMENTER/CONCATENATOR ─1220

RLC HEADER ATTACHER ─1225

SWITCH ─1230

⟋1235-1

⟋1235-2

⟋1235-3

MAC_1

MAC_2

MAC_3

FIG.12

CONFIGURATION INFORMATION RECEPTION
FROM RRC LAYER (MAC LIST) — 1305

COMMON BUFFER CONFIGURATION,
POINTER INITIALIZATION,
PDU SN INITIALIZATION (MAC LIST) — 1310

SEGMENTER/CONCATENATOR
CONFIGURATION — 1315

RLC HEADER ATTACHER CONFIGURATION — 1320

SWITCH CONFIGURATION (MAC LIST) — 1325

FIG.13

COMMON BUFFER: REPORT
BUFFERED AMOUNT TO MAC_x — 1405

COMMON BUFFER: SCHEDULING
INFORMATION RECEPTION
FROM MAC_x (No_PDU, PDU_size) — 1410

COMMON BUFFER: DETERMINATION
OF DATA AMOUNT TO TRANSMIT
TO CELL x (data_transmit_x) — 1415

COMMON BUFFER:
PDU SN_x CALCULATION
(PDU SN_x=PDU SN_x+No_PDU) — 1420

COMMON BUFFER: TRANSMISSION
OF AS MUCH DATA AS data_transmit_x,
PDU_size, PDU SN_x, AND MAC ID TO
SEGMENTER/CONCATENATOR — 1425

COMMON BUFFER:
MOVE Pointer_x
(Pointer_x+data_transmit_x) — 1427

SEGMENTER/CONCATENATOR:
SEGMENTATION/CONCATENATION
OF DATA TO PDU_size — 1430

SEGMENTER/CONCATENATOR:
TRANSMISSION OF DATA, PDU SN_x,
AND MAC ID TO RLC HEADER ATTACHER — 1435

RLC HEADER ATTACHER:
ATTACHMENT OF RLC HEADER TO DATA — 1440

RLC HEADER ATTACHER: TRANSMISSION
OF RLC PDU AND MAC ID TO SWITCH — 1445

SWITCH:
TRANSMISSION OF RLC PDU TO MAC — 1450

FIG.14

FIG.15

CONFIGURATION INFORMATION
RECEPTION FROM RRC LAYER (MAC LIST) ~ 1605

COMMON BUFFER CONFIGURATION
AND POINTER INITIALIZATION (MAC LIST) ~ 1610

SWITCH CONFIGURATION (MAC LIST) ~ 1615

FIG.16

```
┌─────────────────────────────────────┐
│         COMMON BUFFER:              │
│ REPORT BUFFERED AMOUNT TO MAC_x     │──1705
└─────────────────────────────────────┘
                  │
                  ▼
┌─────────────────────────────────────┐
│         COMMON BUFFER:              │
│ SCHEDULING INFORMATION RECEPTION    │──1710
│        FROM MAC_x (No_PDU)          │
└─────────────────────────────────────┘
                  │
                  ▼
┌─────────────────────────────────────┐
│         COMMON BUFFER:              │
│ TRANSMISSION OF AS MANY RLC PDUS    │──1715
│   AS No_PDU AND MAC ID TO SWITCH    │
└─────────────────────────────────────┘
                  │
                  ▼
┌─────────────────────────────────────┐
│         COMMON BUFFER:              │
│ MOVE Pointer_x (Pointer_x+No_PDU)   │──1720
└─────────────────────────────────────┘
                  │
                  ▼
┌─────────────────────────────────────┐
│            SWITCH:                  │
│  TRANSMISSION OF RLC PDUS TO MAC    │──1725
└─────────────────────────────────────┘
```

# FIG.17

UPPER LAYER / 1805

```
COMMON RLC ENTITY                                    / 1810

        ┌──────────────────────────────────┐
        │     SEGMENTER/CONCATENATOR        │── 1815
        └──────────────────────────────────┘
        ┌──────────────────────────────────┐
        │       RLC HEADER ATTACHER         │── 1820
        └──────────────────────────────────┘
        ┌──────────────────────────────────┐
        │       COPIER/DISTRIBUTOR          │── 1825
        └──────────────────────────────────┘
```

1830-1            1830-2            1830-3

1835-1            1835-2            1835-3

MAC_1             MAC_2             MAC_3

# FIG.18

CONFIGURATION INFORMATION
RECEPTION FROM RRC LAYER
(MAC LIST, PDU_size) — 1905

SEGMENTER/CONCATENATOR
CONFIGURATION (PDU_size) — 1910

RLC HEADER ATTACHER CONFIGURATION — 1915

COPIER/DISTRIBUTOR CONFIGURATION
(MAC LIST) — 1920

FIG.19